(19) Europäisches Patentamt
European Patent Office
Office européen des brevets

(11) **EP 3 557 166 A1**

(12) **EUROPÄISCHE PATENTANMELDUNG**

(43) Veröffentlichungstag:
**23.10.2019 Patentblatt 2019/43**

(51) Int Cl.:
**F25J 3/04** (2006.01)

(21) Anmeldenummer: **19020260.6**

(22) Anmeldetag: **05.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.04.2018 EP 18020162**

(71) Anmelder: **Linde Aktiengesellschaft**
**80331 München (DE)**

(72) Erfinder: **Golubev, Dimitri**
**82538 Geretsried (DE)**

(74) Vertreter: **Imhof, Dietmar**
**Linde AG**
**Technology & Innovation**
**Corporate Intellectual Property**
**Dr.-Carl-von-Linde-Straße 6-14**
**82049 Pullach (DE)**

(54) **VERFAHREN ZUR TIEFTEMPERATURZERLEGUNG VON LUFT UND LUFTZERLEGUNGSANLAGE**

(57) Es wird ein Verfahren zur Tieftemperaturzerlegung von Luft unter Verwendung einer Luftzerlegungsanlage (100 - 900) vorgeschlagen, wobei in einer Stoffaustauschsäule (13) ein flüssiges erstes Fluid und ein gasförmiges zweites Fluid einem Stoffaustausch miteinander unterworfen werden, wobei der Stoffaustauschsäule (13) ein gasförmiges drittes Fluid entnommen und zumindest teilweise aus der Luftzerlegungsanlage (100 - 900) ausgeleitet wird, wobei der Stoffaustauschsäule (13) ein flüssiges viertes Fluid entnommen und zumindest teilweise in eine Niederdrucksäule (12) eingespeist wird, und wobei das erste Fluid unter Verwendung zumindest eines Teils einer aus der Niederdrucksäule (12) entnommenen sauerstofffreien Flüssigkeit gebildet wird. Das zweite Fluid wird unter Verwendung einer aus einer Hochdrucksäule (11) entnommenen sauerstoffangereicherten Flüssigkeit gebildet. Die aus der Hochdrucksäule (11) entnommene sauerstoffangereicherte Flüssigkeit und Sumpfflüssigkeit der Stoffaustauschsäule (13) werden vermischt und mittels eines Kondensatorverdampfers (7) teilweise verdampft, in welchem ein Flüssigkeitsstrom, der zumindest einen Teil der aus der Hochdrucksäule (11) entnommenen sauerstoffangereicherten Flüssigkeit und zumindest einen Teil der Sumpfflüssigkeit aus der Stoffaustauschsäule (13) umfasst, mittels seines eigenen Drucks durch einen Verdampfungsraum gedrückt und dort partiell verdampft wird. Aus der Stoffaustauschsäule (13) wird zwischen einer Einspeisestelle für das erste Fluid und einer Einspeisestelle für die sauerstoffangereicherte Flüssigkeit ein flüssiges fünftes Fluid entnommen und zumindest teilweise in die Niederdrucksäule (12) eingespeist, wobei das fünfte Fluid oder sein in die Niederdrucksäule (12) eingespeister Anteil unterhalb des vierten Fluids oder seines in die Niederdrucksäule (12) eingespeisen Anteils in die Niederdrucksäule (12) eingespeist wird. Eine Luftzerlegungsanlage (100 - 900) ist ebenfalls Gegenstand der Erfindung.

Fig. 1

EP 3 557 166 A1

**Beschreibung**

Die Erfindung betrifft ein Verfahren und eine Anlage zur Tieftemperaturzerlegung von Luft gemäß den jeweiligen Oberbegriffen der unabhängigen Patentansprüche.

Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Für eine Reihe industrieller Anwendungen wird zumindest nicht ausschließlich reiner Sauerstoff benötigt. Dies eröffnet die Möglichkeit, Luftzerlegungsanlagen hinsichtlich ihrer Erstellungs- und Betriebskosten, insbesondere ihres Energieverbrauchs, zu optimieren. Für Details sei auf Fachliteratur, z.B. F.G. Kerry, Industrial Gas Handbook: Gas Separation and Purification, CRC Press, 2006, Kapitel 3.8, "Development of Low Oxygen-Purity Processes", verwiesen. Beispielsweise können zur Gewinnung von gasförmigem Drucksauerstoff geringerer Reinheit Luftzerlegungsanlagen mit sogenannten Mischsäulen eingesetzt werden. In diesem Zusammenhang sei beispielsweise auf die EP 3 179 186 A1 und die dortigen Zitate verwiesen.

In einem in der US 5,704,228 A vorgeschlagenen Verfahren zur Flüssigkeitsverdampfung durch Wärmetausch mit einem kondensierenden Gas wird der Druck der zu verdampfenden Flüssigkeit reduziert und diese an einem weniger flüchtigen Bestandteil angereichert. Nach einem alternativen Ansatz kann das Gas an dem weniger flüchtigen Bestandteil angereichert werden. Es kann eine Mischsäule eingesetzt werden. Mischsäulenverfahren sind auch in der JP 2000-258054 A, der US 2001/0003909 A1, der CN 106123489 A und der EP 0 982 554 A1 offenbart.

In eine Mischsäule werden herkömmlicherweise kopfnah eine sauerstoffreiche Flüssigkeit und sumpfnah gasförmige Druckluft, sogenannte Mischsäulenluft, eingespeist und einem Stoffaustausch unterworfen. Am Kopf der Mischsäule kann auf diese Weise sogenannter "unreiner" Sauerstoff abgezogen und der Luftzerlegungsanlage als Gasprodukt entnommen werden. Eine sich im Sumpf der Mischsäule abscheidende Flüssigkeit kann an energetisch und/oder trenntechnisch geeigneter Stelle in das verwendete Destillationssäulensystem eingespeist werden. Durch die Verwendung einer Mischsäule kann insbesondere die Energie, die zur Druckerhöhung eines Sauerstoffprodukts benötigt wird, auf Kosten der Reinheit des Sauerstoffprodukts reduziert werden.

Insbesondere in Luftzerlegungsanlagen mit Mischsäulen ist aus den unten näher erläuterten Gründen das maximal nutzbare sogenannte Einblaseäquivalent stark beschränkt. Damit sind jedoch auch die mit einer Erhöhung des Einblaseäquivalents in einer Luftzerlegungsanlage möglichen Energieeinsparungen limitiert.

Die Aufgabe der vorliegenden Erfindung besteht daher darin, diesen Engpass zu beseitigen, auf diese Weise die Effizienz der Luftzerlegung in entsprechenden Anlagen zu steigern, und nach Möglichkeit auch die entstehenden Kosten zu reduzieren.

Offenbarung der Erfindung

Diese Aufgabe wird durch ein Verfahren und eine Anlage zur Tieftemperaturzerlegung von Luft mit den jeweiligen Merkmalen der unabhängigen Patentansprüche gelöst. Vorteilhafte Ausgestaltungen sind Gegenstand der jeweiligen abhängigen Patentansprüche sowie der nachfolgenden Beschreibung.

Nachfolgend werden zunächst einige bei der Beschreibung der vorliegenden Erfindung und ihrer Vorteile verwendete Begriffe sowie der zugrunde liegende technische Hintergrund näher erläutert.

In Luftzerlegungsverfahren können zur Kälteerzeugung und Verflüssigung von Stoffströmen an unterschiedlichen Stellen Turboexpander, kurz auch als "Turbinen" bezeichnet, eingesetzt werden, wie dem Fachmann grundsätzlich bekannt. Nachfolgend ist von "Claude-Turbinen", "Lachmann-Turbinen" und "Druckstickstoff-Turbinen" die Rede. Zur Funktion und zum Zweck solcher Turboexpander wird auf Fachliteratur, beispielsweise F.G. Kerry, Industrial Gas Handbook: Gas Separation and Purification, CRC Press, 2006, insbesondere die Abschnitte 2.4, "Contemporary Liquefaction Cycles", 2.6, "Theoretical Analysis of the Claude Cycle" und 3.8.1, "The Lachmann Principle", verwiesen.

Mittels einer Claude-Turbine wird im Fall eines Doppelsäulensystems abgekühlte Druckluft von einem höheren Druckniveau auf das Druckniveau der Hochdrucksäule entspannt und in diese eingespeist. Mittels einer Lachmann-Turbine wird abgekühlte Druckluft hingegen auf das Druckniveau der Niederdrucksäule entspannt und in diese eingespeist. Mittels einer Druckstickstoff-Turbine wird schließlich Stickstoff aus der Hochdrucksäule entspannt.

Eine typische Lachmann-Turbine ("Einblaseturbine") entspannt abgekühlte (und in diesem Beispiel nicht weiter verdichtete) Druckluft von einem Druckniveau von beispielsweise ca. 5,0 bis 7,0 bar (abs.), dem typischen Druckniveau, auf dem eine Hochdrucksäule betrieben wird, oder von einem anderen Druckniveau, auf ein Druckniveau von beispielsweise ca. 1,2 bis 1,6 bar (abs.), dem typischen Druckniveau, auf dem eine Niederdrucksäule betrieben wird. Die in der Lachmann-Turbine entspannte Luft wird in die Niederdrucksäule eingespeist ("eingeblasen"). Die Entspannung eines entsprechenden Anteils an Einsatzluft ist durch den angegebenen Druckunterschied zwischen Hochdrucksäule und Niederdrucksäule möglich.

Die auf diese Weise in die Niederdrucksäule entspannte Luft stört jedoch die Rektifikation, weshalb die Menge der in der Einblaseturbine entspannbaren Luft und damit die für eine entsprechende Anlage auf diese Weise erzeugbare Kälte grundsätzlich, d.h. auch ohne den Einsatz einer Mischsäule, begrenzt sind. Auch stickstoffreiche Luftprodukte, die der Hochdrucksäule entnommen und aus der Luftzerlegungsanlage ausgeführt werden, beeinflussen die Rektifikation in entsprechender Weise. Die Menge der in der Niederdrucksäule eingespeisten Luft zuzüglich des der Hochdrucksäule entnommenen und aus der Luftzerlegungsanlage ausgeführten Stickstoffs kann im Verhältnis zur gesamten, dem Destillationssäulensystem zugeführten Luft angegeben werden. Der dabei erhaltene Wert wird üblicherweise auch als "Einblaseäquivalent" bezeichnet.

Das Einblaseäquivalent ist also definiert als die Menge der verdichteten und mittels einer Einblaseturbine in die Niederdrucksäule einer Luftzerlegungsanlage entspannten Druckluft zuzüglich der Menge des Stickstoffs, der ggf. der Hochdrucksäule entnommen und weder als flüssiger Rücklauf in die Hochdrucksäule selbst zurückgeführt noch als flüssiger Rücklauf auf die Niederdrucksäule aufgegeben wird, bezogen auf die gesamte in das Destillationssäulensystem eingespeiste Druckluft. Der Stickstoff, der der Hochdrucksäule entnommen wird, kann dabei reiner oder im Wesentlichen reiner Stickstoff vom Kopf der Hochdrucksäule sein, aber auch ein an Stickstoff angereichertes Gas, das mit geringerem Stickstoffgehalt aus einem Bereich unterhalb des Kopfs aus der Hochdrucksäule abgezogen werden kann.

Wird in einer entsprechenden Luftzerlegungsanlage eine Einblaseturbine eingesetzt und in dieser eine Menge M1 an Druckluft entspannt, eine Menge M2 Stickstoff der Hochdrucksäule entnommen und als flüssiges und/oder gasförmiges Stickstoffprodukt der Luftzerlegungsanlage entnommen, d.h. nicht als Rücklauf auf die Hoch- und/oder die Niederdrucksäule verwendet, und eine Menge M3 an Druckluft dem Destillationssäulensystem insgesamt zugeführt, ergibt sich das Einblaseäquivalent E in einer entsprechenden Anlage zu

$$E = (M1 + M2) / M3 \qquad\qquad (1)$$

Grundsätzlich ermöglicht die Erhöhung des Einblaseäquivalents in einer Luftzerlegungsanlage eine Verringerung des Energiebedarfs.

Die Entspannung von Stickstoff bzw. eines stickstoffreichen Fluids aus der Hochdrucksäule in einer Druckstickstoff-Turbine kann erfolgen, bevor dieser Stickstoff im Hauptwärmetauscher vollständig erwärmt wird (sogenannte kalte Druckstickstoff-Turbine) oder danach (sogenannte warme Druckstickstoff-Turbine). Der entspannte Stickstoff kann anschließend insbesondere zur Regeneration von Adsorbern eingesetzt werden. Auch durch die Verwendung einer Druckstickstoff-Turbine kann der Energieverbrauch einer Luftzerlegungsanlage gesenkt werden. Auch der in einer Druckstickstoffturbine entspannte reine oder unreine Druckstickstoff aus der Hochdrucksäule trägt jedoch zum Einblaseäquivalent bei, da er nicht als Rücklauf auf die Hoch- und/oder die Niederdrucksäule verwendet wird.

Wird einer Druckstickstoff-Turbine Stickstoff vom Kopf der Hochdrucksäule zugeführt, ist dieser entsprechend rein. Einer Druckstickstoff-Turbine kann jedoch auch unreiner Stickstoff aus der Hochdrucksäule zugeführt werden. In letzterem Fall wird eine entsprechende Druckstickstoff-Turbine auch als "Unrein-Druckstickstoff-Turbine" bezeichnet. Eine Unrein-Druckstickstoff-Turbine zeichnet sich dadurch aus, dass ihr ein stickstoffreiches Fluid aus der Hochdrucksäule zugeführt wird, dessen Stickstoffgehalt unterhalb des Stickstoffs des Kopfprodukts der Hochdrucksäule liegt, also unterhalb des maximalen Stickstoffgehalts in der Hochdrucksäule.

Der Grund für das geringere zur Verfügung stehende Einblaseäquivalent bei herkömmlichen Mischsäulenverfahren gegenüber anderen Verfahren zur Tieftemperaturzerlegung von Luft ist insbesondere die Tatsache, dass der in die Mischsäule eingespeiste Luftstrom nicht in optimaler Weise an dem Rektifikationsprozess in der Doppelsäule teilnimmt. So geht insbesondere der in diesem Luftstrom vorhandene Sauerstoff vollständig an der Hoch- und Niederdrucksäule vorbei. Dieser Sauerstoff wird in Form des Kopfprodukts der Mischsäule aus der Luftzerlegungsanlage ausgeleitet. Der in dem Luftstrom zur Mischsäule enthaltene Stickstoff bleibt dagegen (nach dem Austauschprozess in der Mischsäule) fast vollständig in der Sumpfflüssigkeit der Mischsäule. Diese Sumpfflüssigkeit besitzt typischerweise einen Sauerstoffgehalt von ca. 65% und wird in den bekannten Verfahren an einer diesem Sauerstoffgehalt entsprechenden Einspeisestelle in Niederdrucksäule eingespeist.

Diese Einspeisestelle befindet sich jedoch aus trenntechnischer Sicht in einem vergleichsweise weit unten liegenden Bereich der Niederdrucksäule, d.h. an einer Stelle, an der der Sauerstoffgehalt noch vergleichsweise hoch ist. Der unterhalb der Einspeisestelle liegende Rektifikations- bzw. Trennabschnitt kann bereits als Sauerstoffabschnitt angesehen werden, da unterhalb der Einspeisestelle für das Sumpfprodukt der Mischsäule keine weitere Einspeisung in die Niederdrucksäule erfolgt. Daher muss der Stickstoff aus dem Luftstrom zur Mischsäule (der in Form der Sumpfflüssigkeit der Mischsäule in die Niederdrucksäule gelangt) aus trenntechnischer Sicht von sehr weit unten abgetrennt werden. Diese Trennung ist unter gegebenen Bedingungen jedoch ausgesprochen aufwendig und erfordert eine relativ große Leistung am Hauptkondensator. Daher muss die Einblasemenge in die Niederdrucksäule bzw. das erwähnte Einblaseäquivalent entsprechend reduziert werden, um eine zufriedenstellende Trennung bewerkstelligen zu können.

Die in einer Luftzerlegungsanlage eingesetzten Vorrichtungen sind in der zitierten Fachliteratur, beispielsweise bei Häring in Abschnitt 2.2.5.6, "Apparatus", beschrieben. Sofern die nachfolgenden Definitionen nicht hiervon abweichen, wird daher zum Sprachgebrauch, der im Rahmen der vorliegenden Anmeldung verwendet wird, ausdrücklich auf die zitierte Fachliteratur verwiesen.

Rektifikations- bzw. Trennkolonnen, die bei der Tieftemperaturzerlegung von Luft eingesetzt werden, weisen sogenannte Trennabschnitte auf. Ein Trennabschnitt ist ein mit Trenneinbauten bzw. Trennstrukturen wie Siebböden, strukturierten oder unstrukturierten Packungen versehener Bereich einer Rektifikationskolonne. Ein Trennabschnitt zeichnet sich insbesondere dadurch aus, dass er zwischen zwei Einspeisestellen für Fluide in eine entsprechende Rektifikationskolonne bzw. zwischen einer Einspeisestelle und einer Entnahmestelle für Fluid liegt und dass sich zwischen diesen beiden Einspeisestellen bzw. der Einspeise- und der Entnahmestelle keine weiteren Einspeisestellen bzw. Entnahmestellen für Fluid in die bzw. aus der Rektifikationskolonne befinden. Die jeweiligen Einspeisestellen sind Einspeiseleitungen für Fluide in die Rektifikationskolonne, die für eine regelhafte Einspeisung im Betrieb einer entsprechenden Luftzerlegungsanlage eingesetzt werden. Entsprechendes gilt für Entnahmestellen. Dies schließt jedoch nicht aus, dass eine entsprechende Rektifikationskolonne zwischen den Einspeisestellen auch weitere Öffnungen aufweist. Diese weiteren Öffnungen werden jedoch bei einem üblichen Betrieb der Luftzerlegungsanlage nicht verwendet. Die Begriffe "Kolonne" und "Säule" einerseits sowie "Destillation" und "Rektifikation" andererseits sowie entsprechende zusammengesetzte Begriffe werden hier synonym verwendet.

Flüssigkeiten und Gase können im hier verwendeten Sprachgebrauch reich oder arm an einer oder an mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 1 0%, 5%, 1 %, 0,1% oder 0,01% auf Mol-, Gewichts- oder Volumenbasis stehen kann. Der Begriff "überwiegend" kann der Definition von "reich" entsprechen. Flüssigkeiten und Gase können ferner angereichert oder abgereichert an einer oder mehreren Komponenten sein, wobei sich diese Begriffe auf einen Gehalt in einer Ausgangsflüssigkeit oder einem Ausgangsgas beziehen, aus der oder dem die Flüssigkeit oder das Gas gewonnen wurde. Die Flüssigkeit oder das Gas ist "angereichert", wenn diese oder dieses zumindest den 1,1-fachen, 1,5-fachen, 2-fachen, 5-fachen, 10-fachen 100-fachen oder 1.000-fachen Gehalt, und "abgereichert", wenn diese oder dieses höchstens den 0,9-fachen, 0,5-fachen, 0,1-fachen, 0,01-fachen oder 0,001-fachen Gehalt einer entsprechenden Komponente, bezogen auf die Ausgangsflüssigkeit oder das Ausgangsgas enthält. Ist hier beispielsweise von "Sauerstoff" oder "Stickstoff" die Rede, sei hierunter auch eine Flüssigkeit oder ein Gas verstanden, der reich an Sauerstoff oder Stickstoff ist, jedoch nicht notwendigerweise ausschließlich hieraus bestehen muss.

Die vorliegende Anmeldung verwendet zur Charakterisierung von Drücken und Temperaturen die Begriffe "Druckniveau" und "Temperaturniveau", wodurch zum Ausdruck gebracht werden soll, dass Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise $\pm$ 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus. Bei dem hier in bar angegebenen Druckniveaus handelt es sich um Absolutdrücke.

Vorteile der Erfindung

Wie erläutert, ist das nutzbare Einblaseäquivalent bei bekannten Mischsäulenverfahren im Vergleich zu anderen Verfahren der Tieftemperaturzerlegung von Luft deutlich geringer. Dadurch wird das Einsatzgebiet von entsprechenden Verfahren stark eingeschränkt bzw. bedarf es in bestimmten Fällen zusätzlicher Maßnahmen, die zu spürbarer Kostenerhöhung führen. So wird z.B. ein mehrstufiger Verdichter für gasförmigen Stickstoff benötigt, wenn neben einem Sauerstoffprodukt auch eine relativ hohe Menge an Druckstickstoff gefordert wird.

Auch im Falle einer erhöhten Flüssigproduktion (die deutlich größer ist als eine zur Ausschleusung unerwünschter Komponenten erforderliche Spülmenge) sind Mischsäulenverfahren vergleichsweise nachteilig, da hierbei entweder eine schlechtere Sauerstoffausbeute in Kauf genommen werden muss (was zu hohen Betriebskosten aufgrund hoher Einblasemengen führt) oder andere Maßnahmen wie beispielsweise eine zusätzliche Mitteldruckturbine in Kombination mit einer sogenannten Hochluftdruck-Verschaltung benötigt werden. Die Verringerung der Sauerstoffausbeute ergibt sich daraus, dass bei einer erhöhten Flüssigproduktion eine höhere Kälteleistung erforderlich ist, die aber nur durch eine höhere Turbinen- bzw. Einblasemenge gedeckt werden kann. Dies führt bei konventionellen Mischsäulen aber sehr schnell zur Reduzierung der Sauerstoffausbeute, d.h. es werden mehr Luftmoleküle (mehr Einsatzluft) im Prozess benötigt, um die gleiche Anzahl von Produkt-Sauerstoffmolekülen zu produzieren. Der Einsatz der weiteren genannten Maßnahmen führt zu erhöhten Erstellungskosten entsprechender Anlagen.

Betrachtet man den Wärmetauscher bei einem optimierten (aber konventionellen) Mischsäulenverfahren, so muss dieser auch bei reiner Gasproduktion vergleichsweise groß dimensioniert werden, da die Turbinenleistung (bzw. die Turbineneinblasemenge) auch stark von sogenannten Austauschverlusten am warmen Ende des Wärmetauschers abhängt. Die Austauschverluste sollten daher bei einem Mischsäulenverfahren durch eine Erhöhung der Austauschfläche im Wärmeübertrager vergleichsweise klein gehalten werden.

Die vorliegende Erfindung überwindet die erläuterten Nachteile dadurch, dass in die Mischsäule oder in einen vergleichbaren, zum Stoffaustausch verwendeten Apparat (ein solcher Apparat wird nachfolgend ebenfalls vereinfacht als "Mischsäule bezeichnet) kein Einsatzluftstrom, sondern stattdessen ein anderer Stoffstrom eingespeist wird. Hierbei handelt es sich im Rahmen der vorliegenden Erfindung um eine sauerstoffangereicherte Flüssigkeit aus der Hochdrucksäule, insbesondere deren Sumpfflüssigkeit. Diese gegenüber atmosphärischer Luft bereits mit Sauerstoff angereicherte Flüssigkeit wird insbesondere flüssig in die Mischsäule bzw. einen entsprechenden Apparat eingespeist und mischt sich dabei mit in der Mischsäule bzw. dem entsprechenden Apparat herabfließender Flüssigkeit, insbesondere im Sumpf. Mittels eines Verdampfers wird die gemischte Flüssigkeit wie nachfolgend erläutert verdampft und der gebildete Dampf steigt in der Mischsäule bzw. dem entsprechenden Apparat auf. Die Gasphase in einer entsprechenden Mischsäule bzw. dem entsprechenden Apparat wird gemäß der vorliegenden Erfindung also nicht durch Druckluft, sondern in dieser alternativen Weise gebildet.

Der Verdampfungsprozess erfolgt dabei insbesondere durch (Teil-)Kondensation eines Luftstroms bei einem entsprechenden Druck. Auf diese Weise verflüssigte Luft kann insbesondere anschließend unterkühlt und an einer passenden Einspeisestelle in die Niederdrucksäule eingespeist werden. Diese Einspeisestelle befindet sich jedoch vergleichsweise weit oben in der Niederdrucksäule, d.h. an einer Position, an der der Sauerstoffgehalt bereits vergleichsweise niedrig ist. Aus dem Sumpf der Hochdrucksäule abgezogene Flüssigkeit wird auf diese Weise sozusagen (aus der Sicht der Flüssigbilanz) auf zwei Fraktionen aufgeteilt, nämlich auf eine erste Fraktion, die durch Teil-Verdampfung im Kondensator der Mischsäule etwas an Sauerstoff angereichert wird, und die Flüssigluft. Diese Aufteilung erlaubt eine bessere Optimierung von Flüssig/Dampf-(F/D)-Verhältnissen in der Niederdrucksäule und auf diese Weise eine bessere Annäherung der Gleichgewichts- und Arbeitslinie im McCabe-Thiele-Diagramm. Daher wird im Rahmen der vorliegenden Erfindung vorteilhafterweise ein zusätzlicher Trennabschnitt in der Niederdrucksäule bereitgestellt. Ein Teil der Sumpfflüssigkeit aus der Hochdrucksäule (wenn auch vermischt mit der in der Mischsäule herabfließender Flüssigkeit) wird durch Verflüssigung von Luft verdampft und gasförmig in die Mischsäule geleitet.

Die verdampfte Menge entspricht dabei ungefähr der dabei verflüssigten Luft (die anschließend in die Niederdrucksäule geleitet wird). Daher ergibt sich eine entsprechende Analogie: Die Sumpfflüssigkeit aus der Hochdrucksäule wird praktisch auf zwei Flüssigfraktionen unterschiedlicher Zusammensetzung aufgeteilt.

Ein wesentlicher Vorteil der erfindungsgemäßen Verschaltung besteht jedoch darin, dass die Einsatzluft vollständig in das Destillationssäulensystem geleitet und dort entsprechend zur Bereitstellung von Luftprodukten genutzt werden kann. Wie erwähnt, nimmt der in die Mischsäule eingespeiste Luftstrom in herkömmlichen Verfahren nicht in optimaler Weise an dem Rektifikationsprozess in der Doppelsäule teil und insbesondere der in diesem Luftstrom vorhandene Sauerstoff geht vollständig an der Hoch- und Niederdrucksäule vorbei. Er tut dies jedoch im Rahmen der vorliegenden Erfindung. Auf diese Weise gelingt es, die Rektifikationsverhältnisse stark zu verbessern bzw. den zur Rektifikation erforderlichen Aufwand zu verringern. So gehen keine Sauerstoffmoleküle, wie in herkömmlichen Verfahren, an den Rektifikationskolonnen vorbei (sämtlicher Sauerstoff wird in diesen trenntechnisch behandelt) und es fällt kein überschüssiger und mit höherem Aufwand abzutrennender Stickstoff in der Niederdrucksäule an. Die Leistung des Hauptkondensators kann auf diese Weise stark reduziert werden bzw. ist in einer entsprechenden Anlage eine deutliche Erhöhung des Einblaseäquivalents mit den damit verbundenen Energieeinsparungen möglich.

Durch den Einsatz der vorliegenden Erfindung wird eine deutlich höhere Effizienz im Vergleich zu herkömmlichen Mischsäulenverfahren erzielt. Durch den Einsatz der vorliegenden Erfindung kann u.U. auch das Volumen des Hauptwärmetauschers deutlich verringert werden. Dies ist insbesondere aufgrund der deutlich höheren Einblasung möglich, die die vorliegende Erfindung zulässt. Im Rahmen der vorliegenden Erfindung ist es ferner möglich, nur eine einzelne Generatorturbine einzusetzen, falls Luft auf diese Weise in die Niederdrucksäule eingespeist wird. Es besteht keine Notwendigkeit für zwei Einheiten, die in herkömmlichen Verfahren mit Mischsäulen für entsprechende Halblast- oder Flüssigfälle erforderlich sind. Ferner ergeben sich spürbar kleinere Abmessungen bei diversen Bauteilen wie Drucksäule und Hauptkondensator

Zur Erzielung der genannten Vorteile geht die vorliegende Erfindung von einem Verfahren zur Tieftemperaturzerlegung von Luft unter Verwendung einer Luftzerlegungsanlage mit einem Destillationssäulensystem aus, das eine auf einem ersten Druckniveau betriebene Hochdrucksäule, eine auf einem zweiten Druckniveau unterhalb des ersten Druckniveaus betriebene Niederdrucksäule und eine auf einem dritten Druckniveau betriebene Stoffaustauschsäule aufweist. Die Stoffaustauschsäule kann insbesondere auf einem Druckniveau betrieben werden, das zwischen dem Druckniveau der Hochdrucksäule und dem Druckniveau der Niederdrucksäule liegt. Die Stoffaustauschsäule kann grundsätzlich vergleichbar mit einer bekannten Mischsäule ausgebildet sein. Sie weist insbesondere Einspeise- und Entnahmestellen für die nachfolgend erläuterten Fluide in jeweils geeigneten Höhen auf, sowie Stoffaustauschstrukturen, die beispielsweise in Form von Siebböden oder in Form geordneter oder ungeordneter Packungen ausgebildet sein können. Wie nachfolgend erläutert, ist der Stoffaustauschsäule im Rahmen der vorliegenden Erfindung ein Kondensatorverdampfer zugeordnet, der wie unten erläutert betrieben wird. Ferner ist die Stoffaustauschsäule im Rahmen der vorliegenden Erfindung, wie nachfolgend erläutert, mit einer zusätzlichen Zwischenentnahmestelle für Flüssigkeit ausgestattet und kann insbesondere einen zugehörigen weiteren Trennabschnitt aufweisen. Entsprechend ist im Rahmen der vorliegenden Erfindung eine Einspeisemöglichkeit für die entnommene Flüssigkeit in die Niederdrucksäule vorgesehen.

In der Stoffaustauschsäule werden ein flüssiges erstes Fluid mit einem ersten Sauerstoffgehalt und ein gasförmiges zweites Fluid mit einem zweiten Sauerstoffgehalt unterhalb des ersten Sauerstoffgehalts einem Stoffaustausch miteinander unterworfen, wobei der Stoffaustauschsäule ein gasförmiges drittes Fluid mit einem dritten, gegenüber dem ersten Sauerstoffgehalt verringerten Sauerstoffgehalt entnommen und zumindest teilweise aus der Luftzerlegungsanlage ausgeleitet wird, und wobei der Stoffaustauschsäule ein flüssiges viertes Fluid mit einem zumindest dem zweiten Sauerstoffgehalt entsprechenden vierten Sauerstoffgehalt entnommen und zumindest teilweise in die Niederdrucksäule eingespeist wird. Insoweit entspricht der Betrieb der im Rahmen der vorliegenden Erfindung eingesetzten Mischsäule also konventionellen Mischsäulen, in denen entsprechende Stoffströme (dort ein flüssiger Stoffstrom aus der Niederdrucksäule und ein Druckluftstrom) einem stofflichen Austausch unterworfen werden und der Mischsäule Kopfgas und Sumpfflüssigkeit entnommen werden.

Wie ebenfalls insoweit noch beim Betrieb von Mischsäulen üblich, wird das erste Fluid auch im Rahmen der vorliegenden Erfindung dabei unter Verwendung einer aus der Niederdrucksäule entnommenen sauerstoffreichen Flüssigkeit gebildet. Diese wird insbesondere ohne weitere Veränderung flüssig in einem oberen Bereich auf die Stoffaustauschsäule aufgegeben und rieselt in dieser herab.

Erfindungsgemäß ist jedoch vorgesehen, dass das zweite Fluid unter Verwendung einer aus der Hochdrucksäule entnommenen sauerstoffangereicherten Flüssigkeit, insbesondere Sumpfflüssigkeit der Hochdrucksäule, gebildet wird. Als "zweites Fluid" wird dabei hier das in der Stoffaustauschsäule gasförmig aufsteigende Fluid bezeichnet. Dieses wird im Rahmen der vorliegenden Erfindung unter zusätzlicher Verwendung einer in der Stoffaustauschsäule gebildeten Flüssigkeit, insbesondere deren Sumpfflüssigkeit gebildet. Die der Hochdrucksäule entnommene sauerstoffangereicherte Flüssigkeit wird zur Bildung des zweiten Fluids verdampft. Sie wird dabei im Rahmen der vorliegenden Erfindung zusammen mit der in der Stoffaustauschsäule gebildeten Flüssigkeit verdampft. Die Verdampfung erfolgt unter Verwendung eines nachfolgend näher erläuterten Kondensatorverdampfers, insbesondere im indirekten Wärmetausch mit verdichteter und abgekühlter Einsatzluft. Der erste Sauerstoffgehalt kann im Rahmen der vorliegenden Erfindung bei 90 bis ca. 99 Molprozent, insbesondere bei 93 bis 98,5 Molprozent, der zweite Sauerstoffgehalt bei 30 bis 45 Molprozent, insbesondere bei 33 bis 40 Molprozent, der dritte Sauerstoffgehalt bei 80 bis 98 Molprozent, insbesondere bei 90 bis 97,5 Molprozent, und der vierte Sauerstoffgehalt bei 55 bis 72 Molprozent, insbesondere bei 59 bis 67 Molprozent Sauerstoff liegen. Im verbleibenden Anteil weisen die genannten Fluide überwiegend Stickstoff sowie zu einem geringeren Anteil Edelgase auf.

Durch diese Maßnahmen lassen sich die erwähnten Vorteile erzielen. Indem hier keine Druckluft in die Stoffaustauschsäule eingespeist wird sondern der in der Stoffaustauschsäule aufsteigende Dampf insbesondere durch Verdampfen der sauerstoffangereicherten Flüssigkeit aus der Hochdrucksäule und der in der Stoffaustauschsäule gebildeten Flüssigkeit, insbesondere deren Sumpfflüssigkeit, gebildet wird, wird, wie erwähnt, die Einsatzluft vollständig in das Destillationssäulensystem geleitet und dort entsprechend getrennt. Auf diese Weise gelingt es, wie bereits erläutert, die Rektifikationsverhältnisse stark zu verbessern bzw. den zur Rektifikation erforderlichen Aufwand zu verringern, insbesondere weil keine Sauerstoffmoleküle an den Rektifikationskolonnen vorbei gehen und kein überschüssiger und mit höherem Aufwand abzutrennender Stickstoff in der Niederdrucksäule anfällt. Auf die weiteren Erläuterungen oben wird verwiesen. Insbesondere verringern sich durch den Einsatz der vorliegenden Erfindung der Trennaufwand und die erforderliche Kondensatorleistung. Auf diese Weise ist es möglich, eine größere Luftmenge in die Niederdrucksäule einzublasen, so dass sich der Gesamtenenergiebedarf verringert.

Bei dem zweiten Fluid handelt es sich, wie erwähnt, im Rahmen der vorliegenden Erfindung um das in der Stoffaustauschsäule aufsteigende Gas. Dieses zweite Fluid wird im Rahmen der vorliegenden Erfindung, wie ebenfalls zuvor bereits ausführlich angesprochen, dadurch gebildet, dass die aus der Hochdrucksäule entnommene sauerstoffangereicherte Flüssigkeit und Sumpfflüssigkeit der Stoffaustauschsäule mittels eines Kondensatorverdampfers verdampft werden.

Die sauerstoffangereicherte Flüssigkeit aus der Hochdrucksäule, die bei der Bildung des zweiten Fluids verwendet wird, kann im Rahmen der vorliegenden Erfindung einen Sauerstoffgehalt von 38 bis 42 Molprozent, beispielsweise ca. 40 Molprozent aufweisen. Durch die Verwendung eines entsprechenden Kondensatorverdampfers lässt sich, wie erwähnt, parallel zu einer entsprechenden Verdampfung Luft kondensieren oder teilkondensieren, die anschließend insbesondere in die Niederdrucksäule eingespeist werden kann.

Grundsätzlich ist es besonders vorteilhaft, wenn in dem Kondensatorverdampfer eine zuvor verdichtete und abgekühlte Luftmenge weiter abgekühlt und zumindest teilweise verflüssigt wird, die anschließend dem Destillationssäulensystem zugeführt wird. Diese Luftmenge wird hier lediglich aus Gründen der vereinfachten Referenzierung bzw.

sprachlichen Bezugnahme als "erste" Luftmenge bezeichnet. Die erste Luftmenge kann dabei vor der weiteren Abkühlung und zumindest teilweisen Verflüssigung auf das erste Druckniveau, also das Druckniveau der Hochdrucksäule, aber auch auf ein höheres oder niedrigeres Druckniveau verdichtet werden. Wie nachfolgend erläutert, richtet sich das dabei verwendete Druckniveau insbesondere nach dem gewünschten Druckniveau des gasförmigen dritten Fluids, das aus der Stoffaustauschsäule entnommen wird, und das als gasförmiges Sauerstoffprodukt bereitgestellt wird. Zur Verdichtung kommt dabei insbesondere ein Hauptluftverdichter der Luftzerlegungsanlage zum Einsatz oder dieser ist zusammen mit anderen Verdichtern oder Boostern an der Verdichtung beteiligt. Die zunächst vorgenommene Abkühlung vor der weiteren Abkühlung im Kondensatorverdampfer erfolgt insbesondere im Hauptwärmetauscher. Wie erläutert, kann dabei eine entsprechende erste Luftmenge vollständig verflüssigt und in die Niederdrucksäule oder teilweise in die Hochdrucksäule und in die Niederdrucksäule eingespeist werden. Es kann jedoch in bestimmten Fällen auch vorteilhaft sein, wenn eine entsprechende erste Luftmenge teilverflüssigt und, insbesondere in Form eines Zweiphasenstroms, in die Hochdrucksäule eingespeist wird.

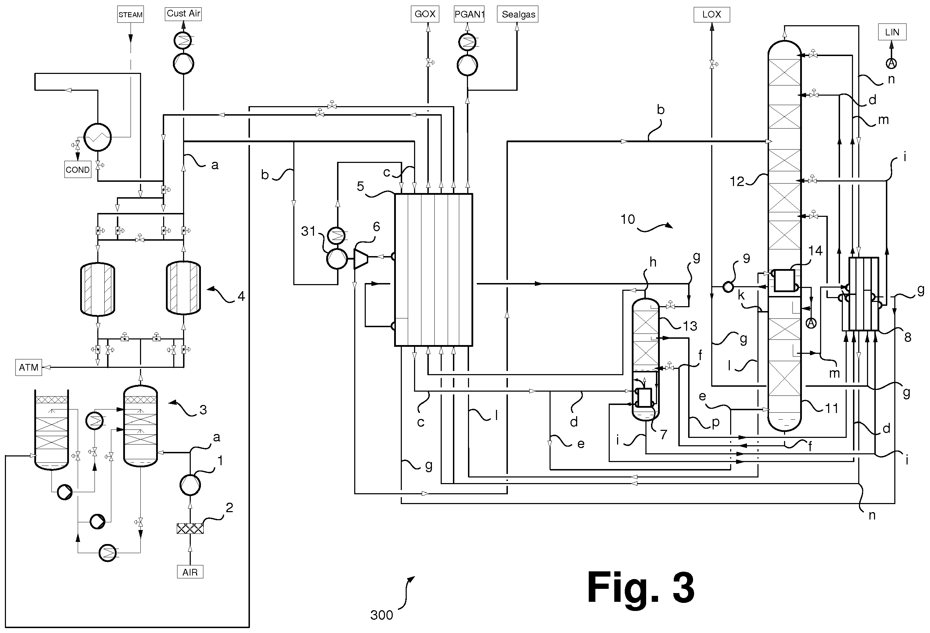

Mit anderen Worten kann vorgesehen sein, dass die verdichtete und abgekühlte erste Luftmenge derart bemessen wird und ihre Verdichtung und ihre Abkühlung derart vorgenommen wird, dass sie in dem Kondensatorverdampfer aufgrund der dort erfolgenden weiteren Abkühlung zumindest teilweise verflüssigt wird, wobei die erste Luftmenge nach der Verflüssigung zumindest teilweise in die Niederdrucksäule oder beispielsweise auch in die Hochdrucksäule und in die Niederdrucksäule eingespeist wird. Wie auch unten unter Bezugnahme auf Figur 3 erläutert, kann in diesem Fall die in dem Kondensatorverdampfer zumindest teilweise verflüssigte erste Luftmenge auch nur in die Niederdrucksäule eingespeist werden. Sie wird zuvor insbesondere durch einen Unterkühler geführt. Insbesondere kann hierbei vorgesehen sein, dass neben der ersten Luftmenge weitere verdichtete und abgekühlte, jedoch unverflüssigte Luft, die insbesondere nicht durch den Kondensatorverdampfer geführt wird, in die Hochdrucksäule eingespeist wird. Die erste Luftmenge und die weitere, unverflüssigt in die Hochdrucksäule eingespeiste Luft werden insbesondere unter Verwendung eines verdichteten Luftstroms gebildet, der dem Hauptwärmetauscher einer entsprechenden Anlage kaltseitig entnommen wird. Dieser Luftstrom ist insbesondere auf ein Druckniveau verdichtet, auf dem die Hochdrucksäule betrieben wird.

In einer weiteren Ausgestaltung der vorliegenden Erfindung kann vorgesehen sein, dass die verdichtete und abgekühlte erste Luftmenge, die in diesem Fall in dem Kondensatorverdampfer aufgrund der dort erfolgenden weiteren Abkühlung nur teilweise verflüssigt wird, die gesamte in die Hochdrucksäule eingespeiste Luft darstellt, also neben der ersten Teilmenge keine weitere Luft in die Hochdrucksäule eingespeist wird. In diesem Fall wird insbesondere neben der ersten Luftmenge und der unten erläuterten zweiten Luftmenge keine weitere Luft in das Destillationssäulensystem eingespeist.

In beiden Fällen wird in Form einer entsprechenden Luftmenge ein Medium bereitgestellt, mittels dessen die sauerstoffangereicherte Flüssigkeit aus der Hochdrucksäule zusammen mit der Sumpfflüssigkeit der Stoffaustauschsäule verdampft werden kann. Die hier verwendete Luft kann vollständig in das Destillationssäulensystem eingespeist werden. Im Gegensatz zu herkömmlichen Mischsäulenverfahren nimmt daher sämtliche eingespeiste Luft an der Rektifikation teil.

Wie erwähnt, richtet sich ein Druckniveau, auf dem Einsatzluft durch den Kondensatorverdampfer geführt wird, insbesondere nach dem gewünschten Druckniveau des gasförmigen dritten Fluids, das aus der Stoffaustauschsäule entnommen und das als gasförmiges Sauerstoffprodukt bereitgestellt wird. In einer Ausgestaltung der vorliegenden Erfindung wird die Verdichtung der ersten Luftmenge dabei vor der zumindest teilweisen Verflüssigung in dem Kondensatorverdampfer auf das erste Druckniveau vorgenommen. Das gasförmige dritte Fluid wird der Luftzerlegungsanlage bzw. einer Coldbox einer derartigen Luftzerlegungsanlage in diesem Fall insbesondere auf einem vergleichsweise geringen Druckniveau entnommen. Dieses zuletzt genannte Druckniveau kann beispielsweise bei ca. 3,2 bar oder weniger liegen. Eine mittlere Temperaturdifferenz in einem die Hochdrucksäule und die Niederdrucksäule wärmetauschend verbindenden Hauptkondensator kann dabei insbesondere ca. 1 K betragen. Ein höherer Sauerstoff-Produktdruck kann grundsätzlich eingesetzt werden, würde jedoch dazu führen, dass das erste Druckniveau hierzu weiter angehoben werden muss. Das ist aber in der Regel mit schlechterer Gesamteffizienz verbunden. Bei einer entsprechenden Verdichtung kann insbesondere ein Hauptluftverdichter vorgesehen sein, dem die erste Luftmenge auf dem ersten Druckniveau entnommen wird. Es kann auch vorgesehen sein, die erste Luftmenge dem Hauptluftverdichter auf einem geringeren Druckniveau zu entnehmen und diese anschließend mittels eines oder mehrerer Booster oder Nachverdichter auf das erste Druckniveau zu bringen. Die erste Luftmenge kann in entsprechender Weise aber auch insgesamt nur auf ein Druckniveau verdichtet werden, die unterhalb des ersten Druckniveaus liegt, insbesondere bei einer anschließenden Einspeisung in die Niederdrucksäule. In einem derartigen Fall kann das gasförmige dritte Fluid der Stoffaustauschsäule der Luftzerlegungsanlage bzw. einer Coldbox einer derartigen Luftzerlegungsanlage insbesondere auf einem vergleichbar geringen oder nochmals geringeren Druckniveau entnommen werden.

Alternativ dazu kann die Verdichtung der ersten Luftmenge vor der zumindest teilweisen Verflüssigung in dem Kondensatorverdampfer auch auf ein Druckniveau oberhalb des ersten Druckniveaus vorgenommen werden. In diesem Fall wird das gasförmige dritte Fluid der Luftzerlegungsanlage bzw. einer Coldbox einer entsprechenden Luftzerlegungsanlage insbesondere auf einem Druckniveau entnommen, das bei mehr als 3,2 bar liegt. Dieses zuletzt genannte Druckniveau kann unterhalb oder oberhalb des ersten Druckniveaus liegen. Das erste Druckniveau entspricht dem Druckniveau der Hochdrucksäule, die insbesondere bei ca. 5,0 bis 7,0 bar betrieben wird. Das Druckniveau, auf das die erste Luftmenge dabei verdichtet wird, kann insbesondere 1 bis 7 bar oberhalb des ersten Druckniveaus, beispielsweise bei 6 bis 14 bar liegen. Eine entsprechende Verdichtung kann ebenfalls in einem Hauptluftverdichter vorgenommen werden, beispielsweise wenn dieser einen entsprechenden Enddruck liefert. Andere Luftströme können in einem derartigen Fall dem Hauptluftverdichter auch auf einem geringeren Druckniveau entnommen werden. Es kann auch vorgesehen sein, die erste Luftmenge dem Hauptluftverdichter auf einem geringeren Druckniveau zu entnehmen und diese anschließend mittels eines oder mehrerer Booster oder Nachverdichter auf das Druckniveau oberhalb des ersten Druckniveaus zu bringen. Das gasförmige dritte Fluid kann der Stoffaustauschsäule bzw. der Luftzerlegungsanlage bzw. deren Coldbox (abzüglich der Druckverluste im Wärmetauscher und in den Leitungen) dabei insbesondere auf einem Druckniveau entnommen werden, das bei 3,5 bis 11 bar oder 4 bis 8 bar liegt. Alternativ dazu ist auch eine Verdichtung der ersten Luftmenge vor der zumindest teilweisen Verflüssigung in dem Kondensatorverdampfer auf ein Druckniveau unterhalb des ersten Druckniveaus möglich.

In dem erfindungsgemäßen Verfahren wird vorteilhafterweise eine zuvor ebenfalls verdichtete und abgekühlte Luftmenge, die hier lediglich aus Gründen der vereinfachten Referenzierung bzw. sprachlichen Bezugnahme als "zweite" Luftmenge bezeichnet wird, auf das zweite Druckniveau entspannt und in die Niederdrucksäule eingespeist. Hierbei handelt es sich um eine in einer Expansionsturbine (Lachmann-Turbine, Einblaseturbine) entspannte Luftmenge, die wesentlich die Menge der Druckstickstoff- oder Flüssigprodukte beeinflusst, die der Anlage insgesamt entnommen werden können. Nachfolgend wird die Menge des oder der jeweils entnommenen flüssigen Luftprodukte betrachtet. Die Menge wird jeweil als Flüssigstickstoffäquivalentmenge ausgedrückt, wobei diese sich aus dem 1,08-fachen der entnommenen Flüssigsauerstoffmenge zuzüglich der entnommenen Flüssigstickstoffmenge berechnet. Die Flüssigstickstoffäquivalentmenge wird in Normkubikmetern pro Stunde ausgedrückt.

In einer ersten Alternative wird dabei die Verdichtung der zweiten Luftmenge vor deren Abkühlung und Entspannung auf das zweite Druckniveau auf ein Druckniveau vorgenommen , das oberhalb des ersten Druckniveaus, insbesondere 1 bis 11 bar oberhalb des ersten Druckniveaus, beispielsweise bei 6 bis 18 bar, liegt, wobei der Luftzerlegungsanlage ein oder mehrere flüssige Luftprodukte in einer Flüssigstickstoffäquivalentmenge entnommen wird oder werden, die bis zu 3,5 Molprozent einer dem Destillationssäulensystem insgesamt zugeführten Stoffmenge entspricht, und die insbesondere mehr als 1,5 Molprozent der dem Destillationssäulensystem insgesamt zugeführten Stoffmenge entspricht. Das oder die stickstoffreichen Druckprodukte werden dabei unter Verwendung von der Hochdrucksäule entnommenem Fluid gebildet. In dieser Ausgestaltung der vorliegenden Erfindung kann also eine vergleichsweise große Menge entsprechender Produkte bereitgestellt werden. Die Verdichtung der zweiten Luftmenge auf das Druckniveau oberhalb des ersten Druckniveaus kann dabei ebenfalls im Hauptluftverdichter durchgeführt werden, wenn dieser einen entsprechenden Enddruck liefert. Einem entsprechenden Hauptluftverdichter können in diesem Fall weitere Luftströme, beispielsweise die erste Luftmenge, auf einem geeigneten gleichen oder geringeren Druckniveau entnommen werden. Es ist ebenfalls möglich, die Verdichtung zunächst auf ein geringeres Druckniveau im Hauptluftverdichter vorzunehmen, wobei dann eine Nachverdichtung in einem oder mehreren Boostern oder entsprechenden Nachverdichtern erfolgen kann.

In einer zweiten Alternative wird dagegen die Verdichtung der zweiten Luftmenge vor deren Abkühlung und Entspannung auf das zweite Druckniveau nur auf das erste Druckniveau durchgeführt, wobei der Luftzerlegungsanlage ein oder mehrere flüssige Luftprodukte in einer Flüssigstickstoffäquivalentmenge entnommen wird oder werden, die bis zu 1,7 Molprozent einer dem Destillationssäulensystem insgesamt zugeführten Stoffmenge entspricht, und die insbesondere mehr als 0,7 Molprozent der dem Destillationssäulensystem insgesamt zugeführten Stoffmenge entspricht. In dieser Ausgestaltung der vorliegenden Erfindung kann also eine geringere Menge entsprechender Produkte als zuvor bereitgestellt werden. Die Verdichtung kann auf beliebige Weise, insbesondere in einem Hauptluftverdichter, vorgenommen werden. Weitere Luftanteile, insbesondere die erste Luftmenge, können dabei auf dasselbe oder ein höheres Druckniveau verdichtet werden.

Schließlich kann im Rahmen der vorliegenden Erfindung in einer dritten Alternative aber auch vorgesehen sein, dass die Verdichtung der zweiten Luftmenge vor deren Abkühlung und Entspannung auf das zweite Druckniveau auf ein Druckniveau vorgenommen wird, das unterhalb des ersten Druckniveaus liegt, wobei der Luftzerlegungsanlage ein oder mehrere flüssige Luftprodukte in einer Flüssigstickstoffäquivalentmenge entnommen wird oder werden, die bis zu 1,0 Molprozent einer dem Destillationssäulensystem insgesamt zugeführten Stoffmenge entspricht, und die insbesondere (ohne Berücksichtigung von Sicherheitsspülmengen) mehr als 0,0 Molprozent der dem Destillationssäulensystem insgesamt zugeführten Stoffmenge entspricht. Diese Ausgestaltung der vorliegenden Erfindung eignet sich also für solche Fälle, in denen ausgesprochen geringe Mengen entsprechender Produkte bereitgestellt werden sollen. Die Verdichtung kann hier insbesondere im Hauptluftverdichter erfolgen,dem in diesem Fall die zweite Luftmenge insbesondere auf einem Zwischendruckniveau entnommen werden kann. Dabei ist es energetisch besonders günstig, wenn die Luftnachverdichtung noch vor der Luftreinigung erfolgt. Die Luftreinigung bestünde dabei aus zwei unter verschiedenen Drücken arbeiteneden Adsorberstationen (bekannt aus WO2013/053425A2). Insbesondere kann dann, wenn die Verdichtung der zweiten Luftmenge vor deren Abkühlung und Entspannung auf das zweite Druckniveau auf ein Druckniveau vorgenommen wird, das unterhalb des ersten Druckniveaus liegt, auch eine entsprechende Verdichtung der ersten Luftmenge vor der zumindest teilweisen Verflüssigung in dem Kondensatorverdampfer ein Druckniveau unterhalb des ersten Druckniveaus möglich. Die jeweiligen Druckniveaus unterhalb des ersten Druckniveaus können einander dabei insbesondere gleichen.

In allen erläuterten Fällen kann also die Ausgestaltung des erfindungsgemäßen Verfahrens an den jeweils gewünschten Druck des gasförmigen dritten Fluids, das der Stoffaustauschsäule bzw. der Luftzerlegungsanlage oder deren Coldbox entnommen wird, also eines sauerstoffreichen Druckprodukts, und die jeweils gewünschte Menge eines oder mehrerer stickstoffreicher Druckprodukte und/oder eines oder mehrerer Flüssigprodukte angepasst werden. Dabei kann zusammengefasst die Verdichtung der ersten Luftmenge, also der sodann in dem Kondensatorverdampfer der Stoffaustauschsäule zumindest teilweise verflüssigten Luftmenge, auf das erste Druckniveau oder ein höheres oder geringeres Druckniveau (letzteres insbesondere bei Einspeisung der zumindest teilweise verflüssigten Luft in die Niederdrucksäule und bei vergleichsweise geringen Produktdrücken) und die Verdichtung der zweiten Luftmenge, also der sodann insbesondere in einer Expansionsturbine entspannten und in die Niederdrucksäule eingespeisten Luftmenge auf ein Druckniveau, das oberhalb des, bei dem oder unterhalb des ersten Druckniveaus liegt, erfolgen. Eine weitere Luftmenge, die in die Hochdrucksäule eingespeist wird, nachdem sie durch den Hauptwärmetauscher geführt wird, und die stromauf des Hauptwärmetauschers und stromauf der Hochdrucksäule keinen Druck- und/oder temperaturbeeinflussenden Maßnahmen mehr unterworfen wird, wird hingegen stromauf des Hauptwärmetauschers vorteilhafterweise auf das erste Druckniveau verdichtet. Je nach dem zu erzielenden Druckniveau ein Haupluftverdichter alleine oder eine Kombination eines Haupluftverdichters mit einem oder mehrerern Boostern und/oder Nachverdichtern eingesetzt werden.

In einer anderen Ausgestaltung der vorliegenden Erfindung kann eine entsprechende, zuvor verdichtete und abgekühlte zweite Luftmenge auch auf das erste Druckniveau entspannt und in die Hochdrucksäule eingespeist werden, wobei die Verdichtung der zweiten Luftmenge vor deren Abkühlung und Entspannung auf das erste Druckniveau in diesem Fall auf ein Druckniveau vorgenommen wird, das oberhalb des ersten Druckniveaus liegt, und wobei in diesem Fall der Luftzerlegungsanlage ferner ein oder mehrere gasförmige, stickstoffreiche Druckprodukte in einer Gesamtmenge entnommen wird oder werden, die bis zu 30 Molprozent einer dem Destillationssäulensystem insgesamt zugeführten Stoffmenge entspricht.

Gemäß der vorliegenden Erfindung wird der Stoffaustauschsäule ein flüssiges fünftes Fluid mit einem fünften Sauerstoffgehalt zwischen dem dritten und dem vierten Sauerstoffgehalt entnommen und zumindest teilweise in die Niederdrucksäule eingespeist. Das fünfte Fluid wird aus der Stoffaustauschsäule zwischen einer Einspeisestelle für das erste Fluid und einer Einspeisestelle für die sauerstoffangereicherte Flüssigkeit entnommen. Das fünfte Fluid oder sein Anteil, der in die Niederdrucksäule eingespeist wird, wird erfindungsgemäß an einer Position in die Niederdrucksäule eingespeist, die unterhalb einer Position liegt, an der das vierte Fluid oder sein in die Niederdrucksäule eingespeister Anteil in die Niederdrucksäule eingespeist wird. Die beiden Positionen sind vorteilhafterweise einen oder mehrere Trennbereiche bzw. Trennabschnitte voneinander getrennt. Eine Entnahmestelle für das fünfte Fluid kann, wenn die Stoffaustauschsäule eine Gesamtzahl an theoretischen oder praktischen Böden von 5 bis 40 aufweist, insbesondere 10 bis 30 theoretische oder praktische Böden oberhalb des Sumpfs der Stoffaustauschsäule liegen. Wie erwähnt, kann die Stoffaustauschsäule dabei einen weiteren Trennabschnitt aufweisen. Gemäß einer besonders bevorzugten Ausführungsform der vorliegenden Erfindung weist daher die Stoffaustauschsäule einen ersten und einen zweiten Trennabschnitt auf, die insbesondere jeweils Stoffaustauschstrukturen geeigneter Art, insbesondere in Form von Trennböden (Siebböden) oder in Form strukturierter oder unstrukturierter Packungen aufweist. Zwischen dem ersten und dem zweiten Trennabschnitt ist eine Sammelstruktur für Flüssigkeit angeordnet, insbesondere in Form einer sogenannten Tasse, mittels derer das fünfte Fluid gesammelt und ausgeleitet werden kann. Zwischen dem ersten und dem zweiten Trennabschnitt ist insbesondere ein Bereich angeordnet, der keine Stoffaustauschstrukturen der erläuterten Art aufweist.

Durch die Entnahme des fünften Fluids aus der Stoffaustauschsäule und dessen Einspeisung in die Niederdrucksäule, die hierzu ebenfalls mit einem entsprechenden zusätzlichen Trennabschnitt ausgestattet werden kann, gelingt nicht nur eine bessere Optimierung der Flüssigkeits-/Dampf-(F/D)-Verhältnisse in der Niederdrucksäule, sondern es wird auch eine Verbesserung des Stoffaustauschs in der Stoffaustauschsäule erzielt, da der Konzentrationsverlauf im unteren Säulenbereich näher an die Gleichgewichtslinie kommt. Als Ergebnis hiervon kann der Produktdruck eines sauerstoffreichen Luftprodukts erhöht werden, ohne zugleich den entsprechenden Luftdruck erhöhen zu müssen. Dies ist zu einem wesentlichen Grund darauf zurückzuführen, dass die im unteren Abschnitt der Stoffaustauschsäule herabfließende Flüssigkeit deutlich sauerstoffärmer ausfällt (die Flüssigkeit wird also kälter) und geringere Verluste beim Vermischen der beiden Flüssigkeiten entstehen.

Zusätzlich wird im Rahmen der vorliegenden Erfindung vorgeschlagen, als Kondensatorverdampfer zur Verdampfung der aus der Hochdrucksäule entnommenen sauerstoffangereicherten Flüssigkeit und der Sumpfflüssigkeit der Stoffaustauschsäule einen sogenannten Forced-Flow-Kondensatorverdampfer (insbesondere in sogenannter "Ones Through"-Konfiguration) einzusetzen.

In einem Forced-Flow-Kondensatorverdampfer wird ein Flüssigkeitsstrom mittels seines eigenen Drucks durch den Verdampfungsraum gedrückt und dort partiell verdampft. Dieser Druck wird zum Beispiel durch eine Flüssigkeitssäule in der Zuleitung zum Verdampfungsraum erzeugt, also rein hydrostatisch. Die Höhe dieser Flüssigsäule entspricht dabei dem Druckverlust im Verdampfungsraum. Das aus dem Verdampfungsraum austretende Gas-Flüssigkeitsgemisch wird in einem "Once Through"-Kondensatorverdampfer dieser Art nach Phasen getrennt direkt zum nächsten Verfahrensschritt bzw. zu einer stromabwärtigen Vorrichtung weitergeleitet und insbesondere nicht in ein Flüssigkeitsbad des Kondensatorverdampfers eingeleitet, von dem der flüssig verbliebene Anteil erneut angesaugt würde.

In dem erfindungsgemäßen Verfahren ist der Kondensatorverdampfer also derart ausgebildet, dass in diesem ein Flüssigkeitsstrom, umfassend zumindest einen Teil der aus der Hochdrucksäule entnommenen sauerstoffangereicherten Flüssigkeit und zumindest einen Teil der Sumpfflüssigkeit aus der Stoffaustauschsäule mittels seines eigenen Drucks, insbesondere rein hydrostatisch, d.h. ohne zusätzliche Druckbeaufschlagung mittels einer Pumpe (aber ggf. bei einem bestimmten hydrostatischen Druck oder einem allgemeinen Basisdruck, auf dem der Flüssigkeitsstrom bereitgestellt wird, insbesondere dem oben erläuterten überatmosphärischen Betriebsdruck der Stoffaustauschsäule) durch einen Verdampfungsraum gedrückt und dort partiell verdampft wird, wobei ein bei der partiellen Verdampfung nicht verdampfter Anteil insbesondere von einem erneuten Durchströmen des Verdampfungsraums abgehalten wird.

Durch den Einsatz entsprechender Forced-Flow-Kondensatorverdampfer kann der Druck des in einer entsprechenden Anlage in Form des dritten Fluids gewonnenen Sauerstoffprodukts spürbar höher als bei üblichen Ausführungen von Kondensatorverdampfern (sogenannter "Bad"-Kondensatorverdampfern) eingestellt werden. Der Einsatz der erläuterten Arten an Kondensatorverdampfern ist im Rahmen der vorliegenden Erfindung wegen des hohen Flüssigkeitsüberschusses und des relativ geringen Sauerstoffgehalts unbedenklich.

Im Rahmen der vorliegenden Erfindung kann das erste Fluid unter Verwendung von Sumpfflüssigkeit aus der Niederdrucksäule gebildet werden. Gemäß einer weiteren Ausgestaltung wird das erste Fluid dagegen unter Verwendung einer Flüssigkeit gebildet, die der Niederdrucksäule mehrere theoretische oder praktische Böden oberhalb des Sumpfs entnommen wird, wobei aus dem Sumpf der Niederdrucksäule weitere Flüssigkeit entnommen und aus der Luftzerlegungsanlage ausgeleitet wird. Auf diese Weise kann in Form der weiteren, der Niederdrucksäule entnommenen Flüssigkeit auch ein reines Sauerstoffprodukt bereitgestellt werden.

Im Rahmen der vorliegenden Erfindung wird, wie angesprochen, insbesondere Druckluft in die Niederdrucksäule eingeblasen. Diese trägt, wie erwähnt, zum Einblaseäquivalent bei. Ihre Menge kann daher im Vergleich zu bekannten Luftzerlegungsanlagen mit Mischsäulen erhöht werden. In einem Verfahren gemäß einer entsprechenden Ausgestaltung der vorliegenden Erfindung kann also verdichtete und abgekühlte Luft mittels einer oder mehrerer Entspannungsturbinen auf das zweite Druckniveau entspannt und in die Niederdrucksäule eingespeist werden. Diese Luft kann dabei auf das erste Druckniveau, also das Druckniveau der Hochdrucksäule, aber auch auf ein höheres oder niedrigeres Druckniveau verdichtet werden, wie bereits oben unter Bezugnahme auf die zweite Luftmenge erläutert. Zur Verdichtung kommt dabei insbesondere ein Hauptluftverdichter der Luftzerlegungsanlage zum Einsatz oder dieser ist zusammen mit weiteren Verdichtern oder Boostern an der Verdichtung beteiligt. Die Abkühlung erfolgt insbesondere im Hauptwärmetauscher. Vor und/oder nach der Entspannung kann ein entsprechender Luftanteil gekühlt werden, insbesondere in einem Hauptwärmetauscher der Luftzerlegungsanlage. Die Entspannung kann beispielsweise mittels einer Generatorturbine erfolgen. Alternativ ist auch die Entspannung in einer mit einem Booster gekoppelten Turbine möglich, welche einen weiteren Luftanteil auf ein nochmals höheres Druckniveau bringt. Dieser weitere Luftanteil kann insbesondere vor ihrer weiteren Verdichtung abgekühlt oder dem Booster warm zugeführt werden. Neben oder alternativ zu der Verwendung eines entsprechenden Booster ist auch die Verwendung eines separaten Nachverdichters möglich, die einen Luftanteil auf ein höheres als das erste Druckniveau bringt.

Wie erläutert, kann im Rahmen der vorliegenden Erfindung der Stoffaustauschsäule insbesondere mittels Sumpfflüssigkeit der Hochdrucksäule beschickt werden. Der Hochdrucksäule kann jedoch auch (zusätzliche) Sumpfflüssigkeit entnommen und ohne Einspeisung in die Stoffaustauschsäule direkt, d.h. in unveränderter stofflicher Zusammensetzung, in die Niederdrucksäule eingespeist werden. Dies entspricht dem regulären Betrieb einer Luftzerlegungsanlage.

In einer weiteren Ausgestaltung des erfindungsgemäßen Verfahrens kann der Hochdrucksäule ein stickstoffangereichertes oder stickstoffreiches Fluid gasförmig entnommen und anschließend mittels einer oder mehrerer Entspannungsturbinen entspannt werden. Es können also sogenannte Druckstickstoff-Turbinen eingesetzt werden, wie eingangs erläutert. Insbesondere ist auch die Verwendung von sogenannten Unrein-Druckstickstoff-Turbinen möglich. Entsprechend entspannte Fluide können in die Niederdrucksäule eingespeist oder aus der Luftzerlegungsanlage ausgeleitet werden. Sie tragen zum Einblaseäquivalent bei.

Die vorliegende Erfindung erstreckt sich auch auf eine Luftzerlegungsanlage mit einem Destillationssäulensystem, das eine für einen Betrieb auf einem ersten Druckniveau eingerichtete Hochdrucksäule, eine für einen Betrieb auf einem zweiten Druckniveau unterhalb des ersten Druckniveaus eingerichtete Niederdrucksäule und eine für einen Betrieb auf einem dritten Druckniveau eingerichtet Stoffaustauschsäule aufweist, wobei die Luftzerlegungsanlage dafür eingerichtet ist, in der Stoffaustauschsäule ein flüssiges erstes Fluid mit einem ersten Sauerstoffgehalt und ein gasförmiges zweites Fluid mit einem zweiten Sauerstoffgehalt unterhalb des ersten Sauerstoffgehalts einem Stoffaustausch miteinander zu unterwerfen, der Stoffaustauschsäule ein gasförmiges drittes Fluid mit einem gegenüber dem ersten Sauerstoffgehalt verringerten dritten Sauerstoffgehalt zu entnehmen und zumindest teilweise aus der Luftzerlegungsanlage auszuleiten, der weiteren Stoffaustauschsäule ein flüssiges viertes Fluid mit einem zumindest dem zweiten Sauerstoffgehalt entsprechenden vierten Sauerstoffgehalt zu entnehmen und zumindest teilweise in die Niederdrucksäule einzuspeisen, und das erste Fluid unter Verwendung zumindest eines Teils einer aus der Niederdrucksäule entnommenen sauerstoffreichen Flüssigkeit zu bilden. Die Luftzerlegungsanlage ist ferner dafür eingerichtet sind, das zweite Fluid unter Verwendung einer aus der Hochdrucksäule entnommenen sauerstoffangereicherten Flüssigkeit zu bilden. Die Luftzerlegungsanlage ist außerdem dafür eingerichtet, die aus der Hochdrucksäule entnommene sauerstoffangereicherte Flüssigkeit und Sumpfflüssigkeit der Stoffaustauschsäule zu vermischen und in einem Kondensatorverdampfer teilweise zu verdampfen.

In der erfindungsgemäßen Luftzerlegungsanlage ist dabei der Kondensatorverdampfer derart ausgebildet und in die Luftzerlegungsanlage eingebunden, dass ein Flüssigkeitsstrom, der zumindest einen Teil der aus der Hochdrucksäule entnommenen sauerstoffangereicherten Flüssigkeit und zumindest einen Teil der Sumpfflüssigkeit aus der Stoffaustauschsäule umfasst, mittels seines eigenen Drucks durch einen Verdampfungsraum gedrückt und dort partiell verdampft wird.

Ferner ist die Luftzerlegungsanlage erfindungsgemäß dafür eingerichtet, der Stoffaustauschsäule zwischen einer Einspeisestelle für das erste Fluid und einer Einspeisestelle für die sauerstoffangereicherte Flüssigkeit ein flüssiges fünftes Fluid mit einem fünften Sauerstoffgehalt zwischen dem dritten und dem vierten Sauerstoffgehalt zu entnehmen und zumindest teilweise in die Niederdrucksäule einzuspeisen, wobei Mittel bereitgestellt sind, die dafür eingerichtet sind, das fünfte Fluid oder seinen in die Niederdrucksäule eingespeisten Anteil unterhalb des vierten Fluids oder seines in die Niederdrucksäule eingespeisen Anteils in die Niederdrucksäule einzuspeisen. Zur Entnahme und Einspeisung der Fluidströme in der erfindungsgemäß vorgesehenen Weise sind entsprechende Mittel, beispielsweise Verbindungsleitungen und dergleichen, vorgesehen.

Zu Merkmalen und Vorteilen einer entsprechenden Luftzerlegungsanlage sei auf die obigen Erläuterungen bezüglich des erfindungsgemäßen Verfahrens und seiner unterschiedlichen vorteilhaften Ausgestaltungen ausdrücklich verwiesen. Eine entsprechende Luftzerlegungsanlage ist insbesondere zur Durchführung eines entsprechenden Verfahrens eingerichtet und weist entsprechende Mittel auf.

In der erfindungsgemäßen Luftzerlegungsanlage sind die Hochdrucksäule und die Niederdrucksäule insbesondere mittels eines mehrstöckigen Kaskadenverdampfers oder Fallfilmverdampfers wärmetauschend miteinander verbunden.

Die Erfindung wird nachfolgend unter Bezugnahme auf die beigefügten Zeichnungen näher erläutert, welche bevorzugte Ausführungsformen der Erfindung zeigen.

Kurze Beschreibung der Zeichnungen

Figur 1 zeigt eine Luftzerlegungsanlage gemäß einer Ausführungsform der Erfindung in Form eines vereinfachten Prozessflussdiagramms.

Figur 2 zeigt eine Luftzerlegungsanlage gemäß einer Ausführungsform der Erfindung in Form eines vereinfachten Prozessflussdiagramms.

Figur 3 zeigt eine Luftzerlegungsanlage gemäß einer Ausführungsform der Erfindung in Form eines vereinfachten Prozessflussdiagramms.

Figur 4 zeigt eine Luftzerlegungsanlage gemäß einer Ausführungsform der Erfindung in Form eines vereinfachten Prozessflussdiagramms.

Figur 5A zeigt eine Luftzerlegungsanlage gemäß einer Ausführungsform der Erfindung in Form eines vereinfachten Prozessflussdiagramms.

Figur 5B zeigt eine Luftzerlegungsanlage gemäß einer Ausführungsform der Erfindung in Form eines vereinfachten Prozessflussdiagramms.

Figur 5C zeigt eine Luftzerlegungsanlage gemäß einer Ausführungsform der Erfindung in Form eines vereinfachten Prozessflussdiagramms.

Figur 6 zeigt eine Luftzerlegungsanlage gemäß einer Ausführungsform der Erfindung in Form eines vereinfachten Prozessflussdiagramms.

Figur 7 zeigt eine Luftzerlegungsanlage gemäß einer Ausführungsform der Erfindung in Form eines vereinfachten Prozessflussdiagramms.

Figur 8 zeigt eine Luftzerlegungsanlage gemäß einer Ausführungsform der Erfindung in Form eines vereinfachten Prozessflussdiagramms.

Figur 9 zeigt eine Luftzerlegungsanlage gemäß einer Ausführungsform der Erfindung in Form eines vereinfachten Prozessflussdiagramms.

Ausführliche Beschreibung der Zeichnungen

In den Figuren sind einander baulich oder funktionell entsprechende Elemente mit identischen Bezugszeichen angegeben und werden der Übersichtlichkeit halber nicht wiederholt erläutert. Anhand der Figuren werden jeweils Luftzerlegungsanlagen gemäß bevorzugter Ausführungsformen der vorliegenden Erfindung veranschaulicht. Die entsprechenden Erläuterungen betreffen jedoch Verfahren gemäß bevorzugten Ausgestaltungen der vorliegenden Erfindung in gleicher Weise, so dass, wenn nachfolgend Komponenten entsprechender Anlagen beschrieben werden, die entsprechenden Erläuterungen für die durch diese Komponenten durchgeführten Verfahrensschritte in gleicher Weise gelten. In den Figuren sind flüssige Stoffströme jeweils mittels ausgefüllter (schwarzer) und gasförmige Stoffströme jeweils mittels nicht ausgefüllter (weißer) Flusspfeile veranschaulicht.

Die vorstehend als "Stoffaustauschsäule" bezeichnete Einrichtung wird in der Beschreibung der Figuren vereinfacht als "Mischsäule" bezeichnet. Wie erläutert, unterscheidet sie sich von herkömmlichen Mischsäulen durch eine Reihe von Merkmalen.

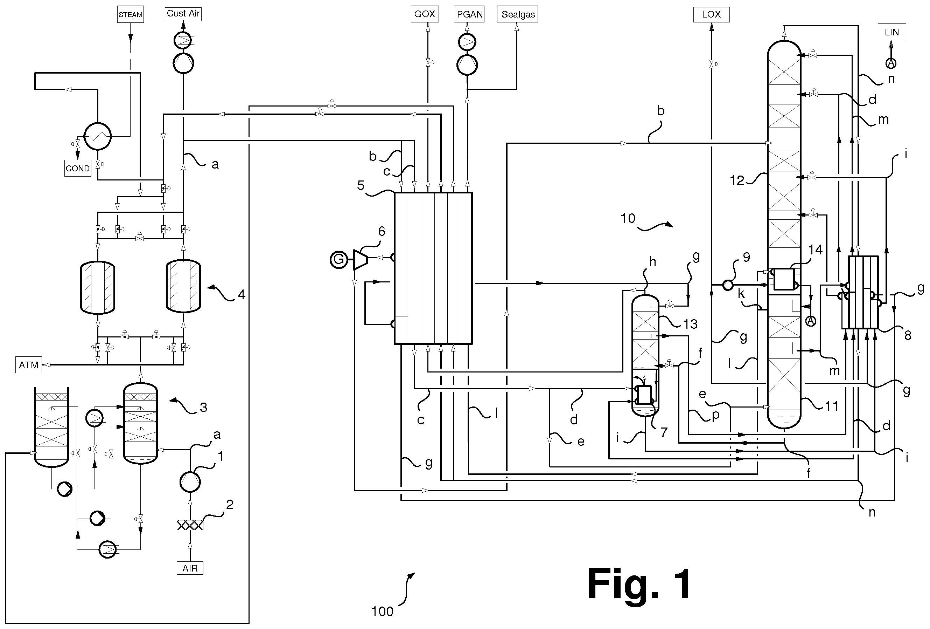

In Figur 1 ist eine Luftzerlegungsanlage gemäß einer Ausführungsform der vorliegenden Erfindung in Form eines stark vereinfachten Prozessflussdiagramms veranschaulicht und insgesamt mit 100 bezeichnet.

In der Luftzerlegungsanlage 100 wird atmosphärische Luft (AIR) mittels eines typischerweise mehrstufig ausgebildeten Hauptluftverdichters 1 über ein Filter 2 angesaugt und als Einsatzluftstrom a einer Kühleinrichtung 3 zugeführt. Nach dortiger Abkühlung wird der Einsatzluftstrom a in einer Adsorptionseinheit 4 aufgereinigt, insbesondere von Wasser und Kohlendioxid befreit. Bei Bedarf kann ein Teil der Luft des weiterhin mit a bezeichneten, gereinigten Einsatzluftstroms weiter verdichtet und zur Belieferung beliebiger Luftverbraucher verwendet werden (Cust Air).

Ein Anteil des Einsatzluftstroms a wird in der Luftzerlegungsanlage 100 als sogenannter Einblasestrom b zunächst in einem Hauptwärmetauscher 5 der Luftzerlegungsanlage 100 auf ein Zwischentemperaturniveau abgekühlt, in einem mit einem Generator G gekoppelten Turboexpander 6 (Lachmann-Turbine) entspannt und in eine Niederdrucksäule 12 eines Destillationssäulensystems 10, das außerdem eine Hochdrucksäule 11 und eine Mischsäule 13 aufweist, eingespeist.

Ein weiterer Anteil des Einsatzluftstroms a wird in der Luftzerlegungsanlage 100 in Form eines Stoffstroms c in dem Hauptwärmetauscher 5 der Luftzerlegungsanlage 100 bis auf ein Endtemperaturniveau abgekühlt und sodann in noch gasförmigem Zustand in zwei Teilströme d und e aufgeteilt.

Der Teilstrom d wird in einem Kondensatorverdampfer 7, der im dargestellten Beispiel in einem unteren Bereich der Mischsäule 13 angeordnet und wie zuvor erläutert als Forced-Flow-Kondensatorverdampfer ausgestaltet ist, verflüssigt, durch einen Unterkühlungsgegenströmer 8 geführt und in die Niederdrucksäule 12 entspannt. Der Teilstrom e wird in einen unteren Bereich der Hochdrucksäule 11 eingespeist.

Aus einem Sumpfbereich der Hochdrucksäule 11 wird sauerstoffangereicherte Flüssigkeit in Form eines Stoffstroms f abgezogen und in einen unteren Bereich eines Stoffaustauschbereichs der Mischsäule 13 entspannt. Er wird also anstelle eines herkömmlicherweise einer Mischsäule 13 zugeführten Einsatzluftstroms eingesetzt. In der Mischsäule 13, insbesondere dem Kondensatorverdampfer 7, verdampfende Flüssigkeit wird einem Stoffstrom g entgegengeschickt, der in einem oberen Bereich des Stoffaustauschbereichs der Mischsäule 13 flüssig aufgegeben wird.

Zur Bildung des Stoffstroms g wird der Niederdrucksäule 12 sauerstoffangereicherte Flüssigkeit aus dem Sumpf entnommen, mittels einer Pumpe 9 auf Druck gebracht, durch den Unterkühlungsgegenströmer 8 geführt und in dem Hauptwärmetauscher 5 auf ein Zwischentemperaturniveau erwärmt. Weitere, der Niederdrucksäule 12 aus dem Sumpf entnommene und mittels der Pumpe 9 auf Druck gebrachte sauerstoffangereicherte Flüssigkeit kann als Flüssigsauerstoffprodukt (LOX) aus der Luftzerlegungsanlage 100 ausgeleitet werden.

Ein vom Kopf des Stoffaustauschbereichs der Mischsäule 13 abgezogenes Gasgemisch wird in Form eines Stoffstroms h in dem Hauptwärmetauscher 5 vollständig erwärmt, entspannt und als gasförmiges Sauerstoffprodukt (GOX) auf einem Druckniveau von beispielsweise ca. 3,2 bar (abs.) bereitgestellt.

Flüssigkeit aus dem Sumpf des Stoffaustauschbereichs der Mischsäule 13 wird in dem Kondensatorverdampfer 7 teilverdampft. Dem Kondensatorverdampfer 7 wird dabei in Form der Flüssigkeit aus dem Sumpf des Stoffaustauschbereichs der Mischsäule 13 ein Flüssigkeitsstrom, der zumindest einen Teil der aus der Hochdrucksäule 11 entnommenen sauerstoffangereicherten Flüssigkeit und zumindest einen Teil der Sumpfflüssigkeit aus der Stoffaustauschsäule 13 umfasst, zugeführt. Der Flüssigkeitsstrom wird mittels seines eigenen Drucks durch den Verdampfungsraum des Kondensatorverdampfers 7 gedrückt und dort partiell verdampft. Der verdampfte Anteil steigt in den Stoffaustauschbereich auf, der nicht verdampfte Anteil wird, zusammen mit in der Mischsäule 13 herabrieselnder Flüssigkeit, in Form eines Stoffstroms i abgezogen. Der Stoffstrom i wird durch den Unterkühlungsgegenströmer 8 geführt und in einen mittleren Bereich der Niederdrucksäule 12 entspannt.

Die Mischsäule 13 weist im dargestellten Beispiel zwei Trennabschnitte auf. Von einem Zwischenbereich der Mischsäule 13 wird ein flüssiger Stoffstrom p abgezogen, der insbesondere wie veranschaulicht unterkühlt und in die Niederdrucksäule 12, die ebenfalls mit einem weiteren Trennabschnitt versehen sein kann, eingespeist wird. Aus der Stoffaustauschsäule 13 wird damit zwischen den Einspeisestellen für die Stoffströme f und g in Form des Stoffstroms p ein flüssiges fünftes Fluid entnommen und zumindest teilweise in die Niederdrucksäule 12 eingespeist. Die Einspeisung in die Niederdrucksäule 12 erfolgt dabei unterhalb des Stoffstroms i.

Stickstoffreiches Gas vom Kopf der Hochdrucksäule 11 wird in Form eines Stoffstroms k aus der Hochdrucksäule 11 abgezogen. Ein Teil hiervon wird in Form eines Stoffstroms l in dem Hauptwärmetauscher 5 erwärmt und nach optionaler weiterer Verdichtung in Form eines gasförmigen Druckstickstoffprodukts (PGAN) bereitgestellt und/oder als Dichtgas (Sealgas) verwendet.

Ein weiterer Anteil des in Form des Stoffstroms k vom Kopf der Hochdrucksäule 11 abgezogenen stickstoffreichen Gases wird in einem die Hochdrucksäule 11 und die Niederdrucksäule 12 wärmetauschend verbindenden Hauptkondensator 14 verflüssigt sowie teilweise als Rücklauf auf die Hochdrucksäule 11 zurückgeführt und teilweise (siehe Verknüpfung A) als Flüssigstickstoffprodukt (LIN) bereitgestellt. Der Hauptkondensator 14 kann insbesondere als mehrstöckiger Kaskaden-Verdampfer ausgebildet sein, wie beispielsweise in der DE 10 2010 051 526 A1 beschrieben.

Aus einem Zwischenbereich der Hochdrucksäule 11 wird ferner ein flüssiges, stickstoffangereichertes Stoffgemisch in Form eines Stoffstroms m abgezogen, durch den Unterkühlungsgegenströmer 8 geführt und in die Niederdrucksäule 12 entspannt.

Vom Kopf der Niederdrucksäule wird sogenannter Unreinstickstoff in Form eines Stoffstroms n abgezogen und durch den Unterkühlungsgegenströmer 8 geführt. Nach Aufteilung in zwei Teilströme und Erwärmung in dem Hauptwärmetauscher 5 kann dieser Unreinstickstoff als Regenerier- bzw. Kühlgas in der Kühleinrichtung 3 bzw. der Adsorptionseinheit 4 genutzt werden.

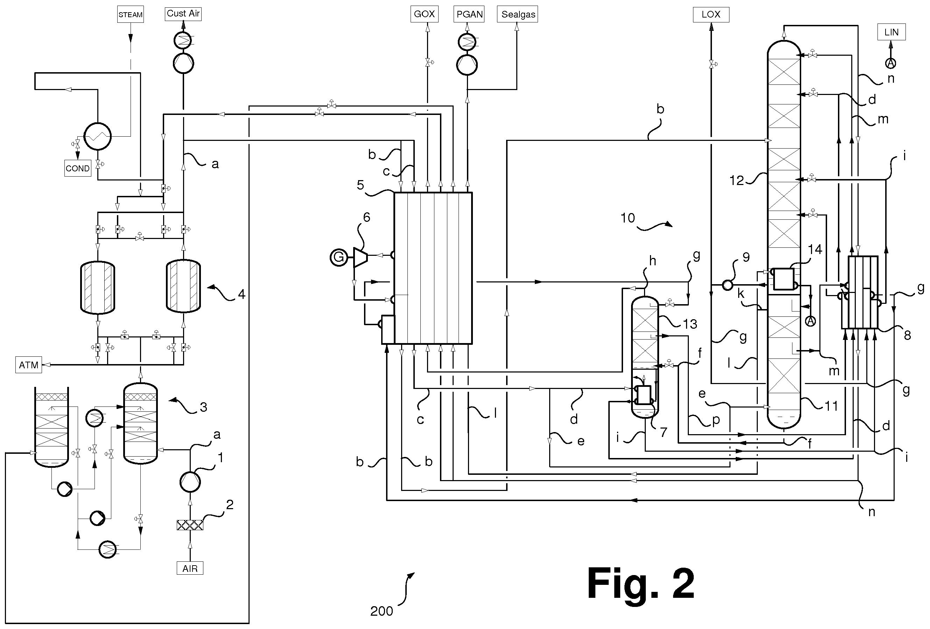

In Figur 2 ist eine Luftzerlegungsanlage gemäß einer weiteren Ausführungsform der vorliegenden Erfindung in Form eines stark vereinfachten Prozessflussdiagramms veranschaulicht und insgesamt mit 200 bezeichnet.

Die in Figur 2 dargestellte Luftzerlegungsanlage 200 unterscheidet sich von der in Figur 1 dargestellten Luftzerlegungsanlage 100 im Wesentlichen dadurch, dass der Teilstrom b der Einsatzluft hier in dem Hauptwärmetauscher 5 weiter abgekühlt wird, nachdem er in der Expansionsturbine 6 entspannt wurde.

In Figur 3 ist eine Luftzerlegungsanlage gemäß einer weiteren Ausführungsform der vorliegenden Erfindung in Form eines stark vereinfachten Prozessflussdiagramms veranschaulicht und insgesamt mit 300 bezeichnet.

Die in Figur 3 dargestellte Luftzerlegungsanlage 300 unterscheidet sich von der in Figur 1 dargestellten Luftzerlegungsanlage 100 im Wesentlichen dadurch, dass der Teilstrom b der Einsatzluft hier in einem mit der Expansionsturbine 6 mechanisch gekoppelten Booster 21 verdichtet wird, bevor er in dem Hauptwärmetauscher 5 auf das Zwischentemperaturniveau abgekühlt wird. Auf diese Weise kann eine Reduzierung der Einblasemenge bei erhöhter Entnahme des gasförmigen Druckstickstoffprodukts (PGAN) erfolgen.

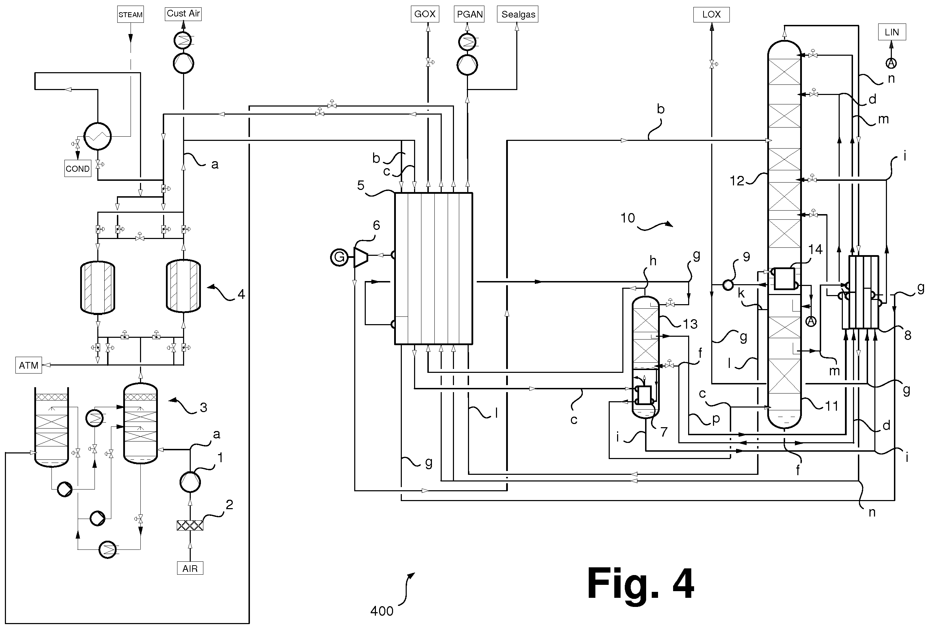

In Figur 4 ist eine Luftzerlegungsanlage gemäß einer weiteren Ausführungsform der vorliegenden Erfindung in Form eines stark vereinfachten Prozessflussdiagramms veranschaulicht und insgesamt mit 400 bezeichnet.

Die in Figur 4 dargestellte Luftzerlegungsanlage 400 unterscheidet sich von der in Figur 1 dargestellten Luftzerlegungsanlage 100 im Wesentlichen dadurch, dass keine Aufteilung des Teilstroms c der Einsatzluft in die zwei Teilströme d und e erfolgt. Vielmehr wird hier der gesamte Teilstrom c in dem Kondensatorverdampfer 7 teilkondensiert und in die Hochdrucksäule 11 eingespeist. Dies ermöglicht es, das gasförmige Sauerstoffprodukt (GOX) auf einem höheren Druckniveau, nämlich auf einem Druckniveau von beispielsweise bis zu ca. 4,0 bar (abs.) bei einer Temperaturdifferenz im Kondensator 14 von ca. 1 K bereitzustellen.

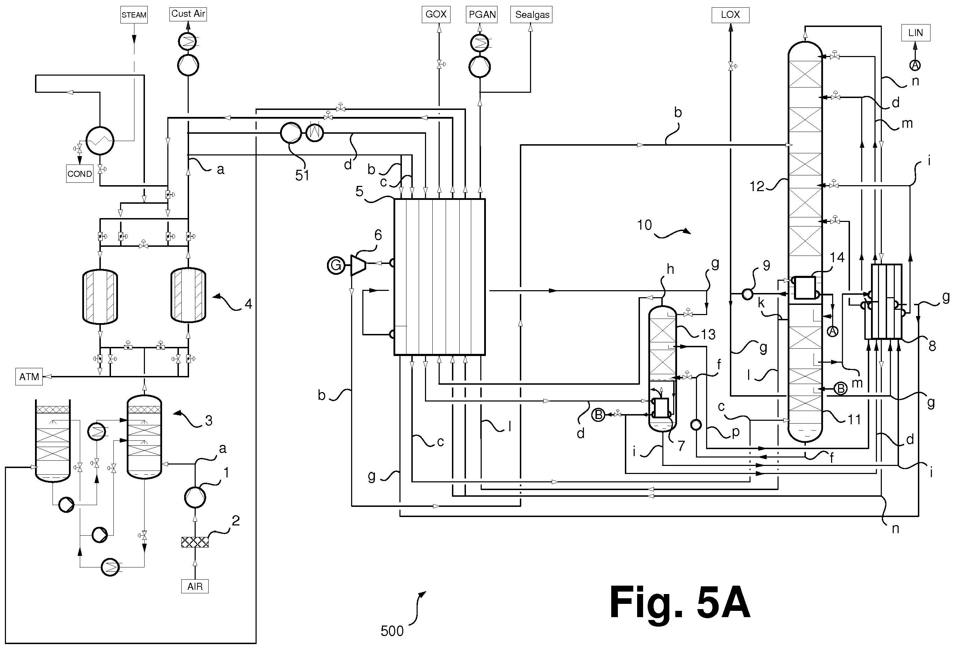

In Figur 5A ist eine Luftzerlegungsanlage gemäß einer weiteren Ausführungsform der vorliegenden Erfindung in Form eines stark vereinfachten Prozessflussdiagramms veranschaulicht und insgesamt mit 500 bezeichnet.

Die in Figur 5A dargestellte Luftzerlegungsanlage 500 unterscheidet sich von der in der Figur 1 dargestellten Luftzerlegungsanlagen 100 im Wesentlichen dadurch, dass ein Nachverdichter 51 zum Einsatz kommt. Dieser kann insbesondere zusammen mit dem Hauptluftverdichter 1 als eine einzige mehrstufige Maschine ausgebildet sein, der der Teilstrom b auf einem Zwischendruck entnommen wird. Er verdichtet einen dem Teilstrom d entsprechenden und hier ebenfalls mit d bezeichneten Teilstrom der Einsatzluft weiter. Dies ermöglicht es ebenfalls, das gasförmige Sauerstoffprodukt (GOX) auf einem höheren Druckniveau bereitzustellen.

Wie in Figur 5A ferner veranschaulicht, wird die in dem Kondensatorverdampfer 7 der Mischsäule 13 verflüssigte Luft hier zum Teil (siehe Verknüpfung B) auch in die Hochdrucksäule 11 eingespeist.

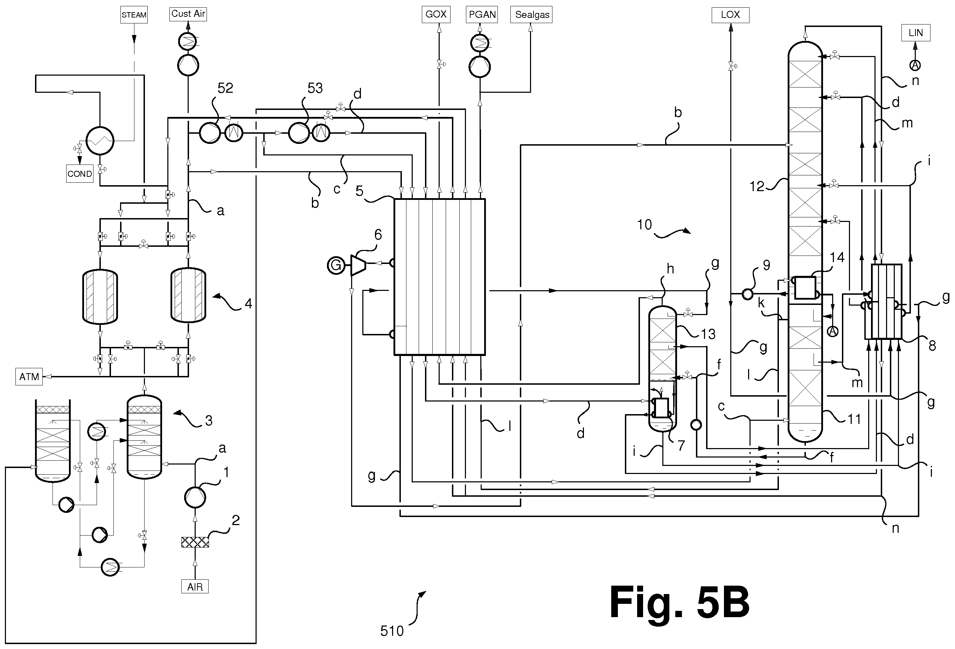

In Figur 5B ist eine Luftzerlegungsanlage gemäß einer weiteren Ausführungsform der vorliegenden Erfindung in Form eines stark vereinfachten Prozessflussdiagramms veranschaulicht und insgesamt mit 510 bezeichnet. Die Luftzerlegungsanlage 510 stellt eine Variante der Luftzerlegungsanlage 500 gemäß Figur 5A dar.

Die in Figur 5B dargestellte Luftzerlegungsanlage 510 unterscheidet sich von der in der Figur 5A dargestellten Luftzerlegungsanlagen 500 im Wesentlichen dadurch, dass anstelle eines Nachverdichters 51 zwei Nachverdichter 52 und 53 zum Einsatz kommen. Diese können ebenfalls zusammen mit dem Hauptluftverdichter 1 als eine einzige mehrstufige Maschine ausgebildet sein, der der Teilstrom b auf einem Zwischendruck entnommen wird. Der Nachverdichter 52 verdichtet dabei zunächst eine Luftmenge, die der Summe der hier ebenfalls mit c und d bezeichneten Teilströme entspricht. Der Teilstrom c wird auf einem entsprechenden Druckniveau, das er durch die Verdichtung in den Nachverdichter 52 erreicht, abgekühlt. Der Teilstrom d wird in dem Nachverdichter 53 weiter verdichtet und anschließend abgekühlt. Die in Figur 5B veranschaulichte Variante der Luftzerlegungsanlage 510 ist insbesondere für eine vergleichsweise geringe Flüssigproduktion bzw. Produktion eines gasförmigen Druckstickstoffprodukts (PGAN) vorgesehen, so dass der Einblasestrom, also der Teilstrom b, auf ein vergleichsweise geringes Druckniveau verdichtet wird.

Die Einsatzluft für die Hochdrucksäule 11, also der Teilstrom c, wird auf deren Druckniveau verdichtet. Die in Figur 5B veranschaulichte Variante der Luftzerlegungsanlage 510 ist ferner ebenfalls dafür vorgesehen, das gasförmige Sauerstoffprodukt (GOX) auf einem höheren Druckniveau bereitzustellen. Daher wird die Luft des Teilstroms d entsprechend weiter verdichtet.

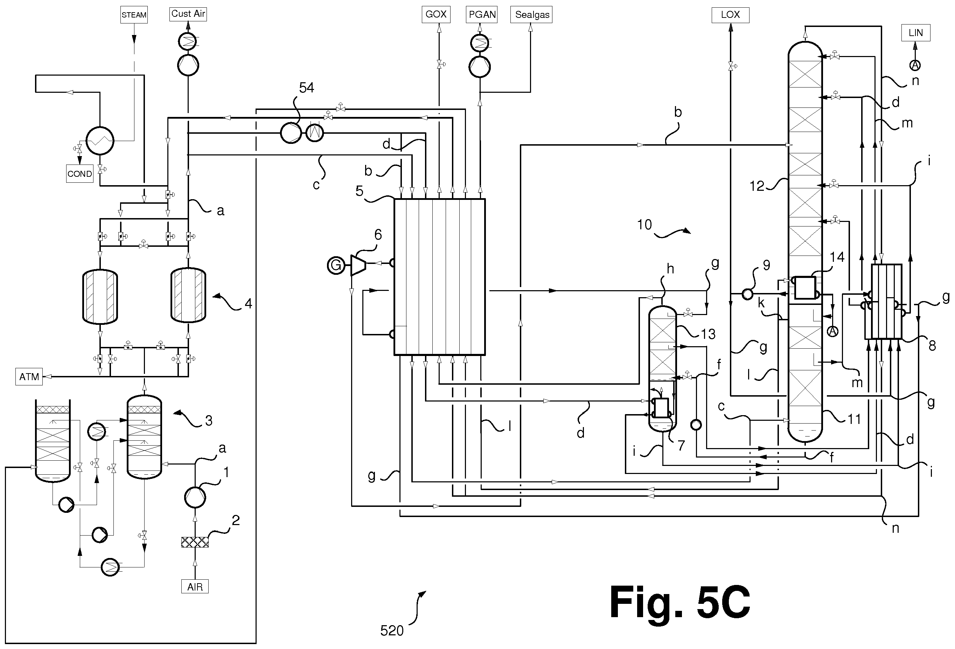

In Figur 5C ist eine Luftzerlegungsanlage gemäß einer weiteren Ausführungsform der vorliegenden Erfindung in Form eines stark vereinfachten Prozessflussdiagramms veranschaulicht und insgesamt mit 520 bezeichnet. Die Luftzerlegungsanlage 520 stellt eine weitere Variante der Luftzerlegungsanlage 500 gemäß Figur 5A dar.

Die in Figur 5C dargestellte Luftzerlegungsanlage 520 unterscheidet sich von der in der Figur 5A dargestellten Luftzerlegungsanlagen 500 im Wesentlichen dadurch, dass anstelle eines Nachverdichters 51 ein Nachverdichter 54 zum Einsatz kommt. Dieser können ebenfalls zusammen mit dem Hauptluftverdichter 1 als eine einzige mehrstufige Maschine ausgebildet sein, dem im vorliegenden Fall aber nun ein dem Teilstrom c entsprechender Teilstrom der Einsatzluft auf einem Zwischendruck entnommen wird. Der Nachverdichter 54 verdichtet eine Luftmenge, die der Summe der hier ebenfalls mit b und d bezeichneten Teilströme entspricht. Die Teilströme b und d werden auf einem entsprechenden Druckniveau, die sie durch die Verdichtung in den Nachverdichter 54 erreichen, abgekühlt.

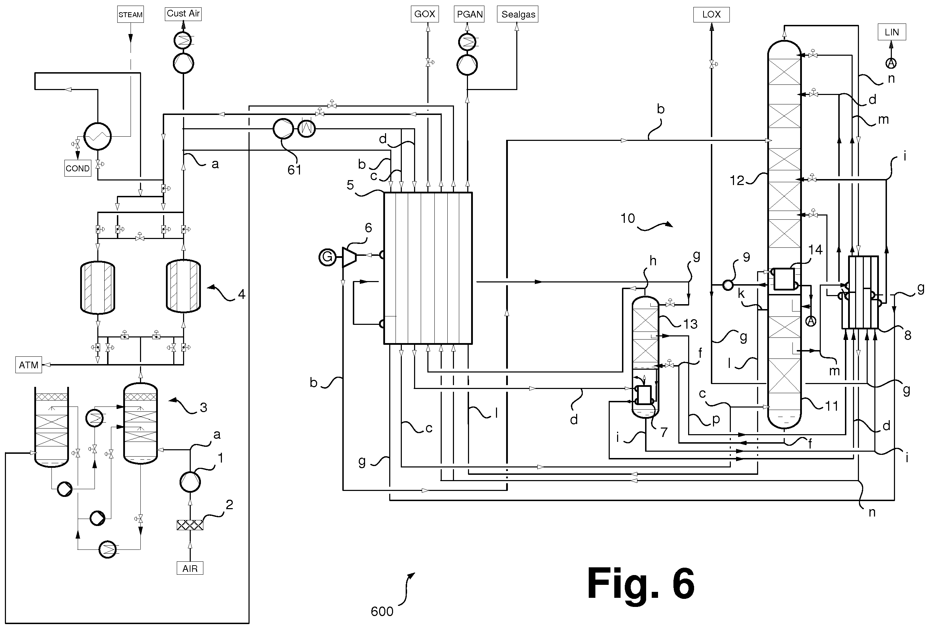

Die in Figur 5C veranschaulichte Variante der Luftzerlegungsanlage 520 ist insbesondere für eine vergleichsweise große Flüssigproduktion bzw. Produktion eines gasförmigen Druckstickstoffprodukts (PGAN) vorgesehen. Das gasförmige Sauerstoffprodukt (GOX) wird dabei unter höherem Druck hergestellt, weshalb die gemeinsame Nachverdichtung der Teilströme b und d vorgenommen wird. Die Expansionsturbine 6 mit einer Boosterstufe ausgeführt werden. In Figur 6 ist eine Luftzerlegungsanlage gemäß einer weiteren Ausführungsform der vorliegenden Erfindung in Form eines stark vereinfachten Prozessflussdiagramms veranschaulicht und insgesamt mit 600 bezeichnet.

Die in Figur 6 dargestellte Luftzerlegungsanlage 600 unterscheidet sich von der in der Figur 5 dargestellten Luftzerlegungsanlagen 500 im Wesentlichen dadurch, dass ein Nachverdichter 61 zum Einsatz kommt, der einen dem Teilstrom c entsprechenden und hier ebenfalls mit c bezeichneten Teilstrom der Einsatzluft sowie einen dem Teilstrom d entsprechenden und hier ebenfalls mit d bezeichneten Teilstrom der Einsatzluft weiter verdichtet. Auch in dieser Ausgestaltung können der Hauptluftverdichter 1 und der Nachverdichter 61 insbesondere als eine einzige mehrstufige Maschine ausgebildet werden, der der Teilstrom b auf einem Zwischendruck entnommen wird.

Die in den Figur 6 dargestellte Luftzerlegungsanlage 600 eignet sich in besonderer Weise für den Fall, dass geringe Mengen an Flüssigprodukten bzw. eines gasförmigen Druckstickstoffprodukts (PGAN) gebildet werden und für den Fall eines Sauerstoff-Produktdruckes, der mit dem in der Luftzerlegungsanlage 100 gemäß Figur 1 vergleichbar ist. Die Turbinenmenge, also die in dem Turboexpander 6 entspannte Luftmenge, ist hierbei groß, die Kälteleistung ist aber relativ gering, da das Druckgefälle an dem Turboexpander relativ gering ist. In diesem Fall u.U. auch relativ große (Haupt-)Wärmetauscher 5 erforderlich, die Effizienz bleibt jedoch sehr hoch, da die Turbinenmenge nicht auf den Enddruck mitverdichtet wird.

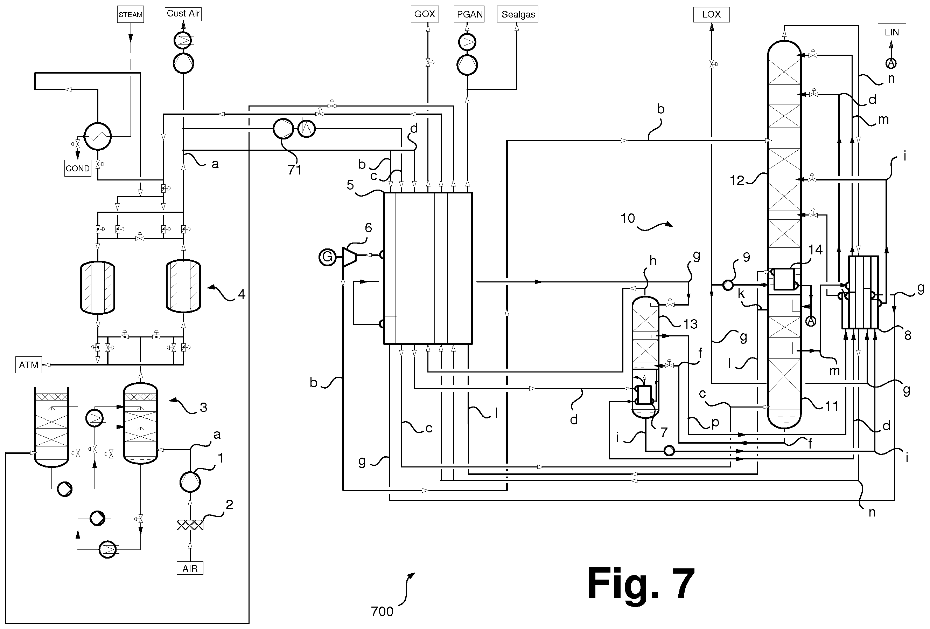

In Figur 7 ist eine Luftzerlegungsanlage gemäß einer weiteren Ausführungsform der vorliegenden Erfindung in Form eines stark vereinfachten Prozessflussdiagramms veranschaulicht und insgesamt mit 700 bezeichnet.

Die in Figur 7 dargestellte Luftzerlegungsanlage 700 unterscheidet sich von der in der Figur 5 dargestellten Luftzerlegungsanlagen 500 im Wesentlichen dadurch, dass ein Nachverdichter 71 zum Einsatz kommt, der jedoch nur einen dem Teilstrom c entsprechenden und hier ebenfalls mit c bezeichneten Teilstrom der Einsatzluft weiter verdichtet. Diese Ausgestaltung eignet sich insbesondere für solche Fälle, in denen neben geringer Menge an Flüssigprodukten bzw. einer geringen Menge eines gasförmigen Druckstickstoffprodukts (PGAN) das gasförmige Sauerstoffprodukt (GOX) auf einem Druckniveau von weniger als ca. 3,2 bar (abs.) bereitgestellt werden soll.

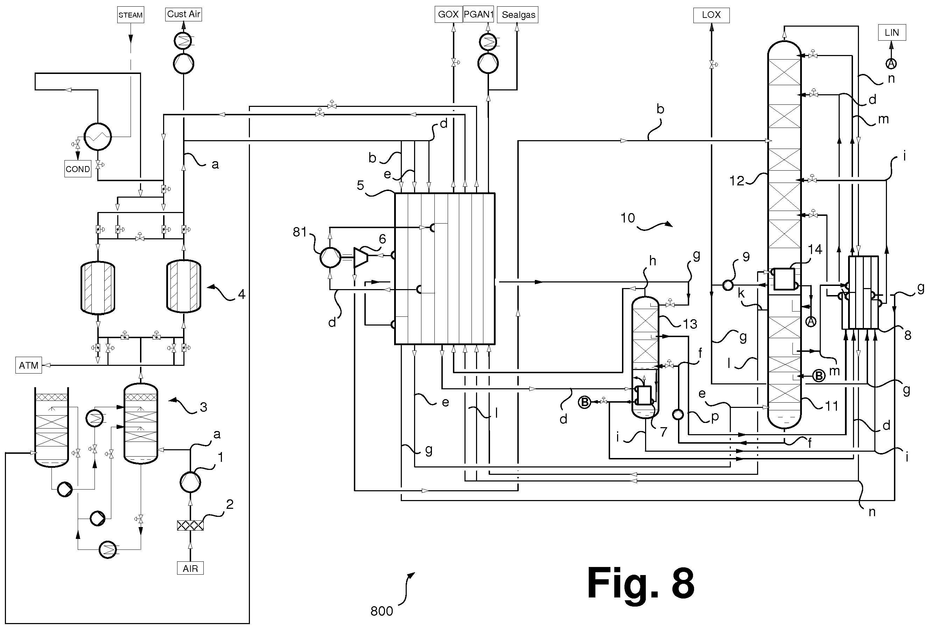

In Figur 8 ist eine Luftzerlegungsanlage gemäß einer weiteren Ausführungsform der vorliegenden Erfindung in Form eines stark vereinfachten Prozessflussdiagramms veranschaulicht und insgesamt mit 800 bezeichnet.

Die in Figur 8 dargestellte Luftzerlegungsanlage 800 unterscheidet sich von der in der Figur 1 dargestellten Luftzerlegungsanlage 100 im Wesentlichen dadurch, dass ein Kaltbooster 81 zum Einsatz kommt, der einen dem Teilstrom d entsprechenden und hier ebenfalls mit d bezeichneten Teilstrom der Einsatzluft, der zuvor in dem Hauptwärmetauscher 5 abgekühlt wurde, weiter verdichtet.

In der Ausführung der Luftzerlegungsanlage 800 gemäß Figur 8 liegt lediglich ein Druckniveau am Hauptluftverdichter vor (bzw. wird nur ein Verdichter verwendet), es wird aber dennoch ein höherer Sauerstoff-Produktdruck erzielt. Die Erhöhung des Druckes des im Kondensatorverdampfer 7 der Mischsäule 13 zu kondensierenden Luftstromes d erfolgt mittels eines Kaltboosters 81. Der (Haupt-)Wärmetauscher 5 wird in diesem Fall relativ groß ausgeführt und die überschussige Kälteleistung praktisch in den höheren Druck umgewandelt. Der Vorteil besteht darin, dass keine zusätzliche Verdichtereinheit bzw. Verdichterstufe eingesetzt werden muss. Die Einheit aus Turboexpander 6 und Kaltbooster 81 kann zusätzlich mit einem Generator oder einer Ölbremse gekoppelt sein.

Wie in Figur 8 ferner veranschaulicht, wird die in dem Kondensatorverdampfer 7 der Mischsäule 13 verflüssigte Luft hier wie in der Ausgestaltung gemäß Figur 5 zum Teil (siehe Verknüpfung B) auch in die Hochdrucksäule 11 eingespeist.

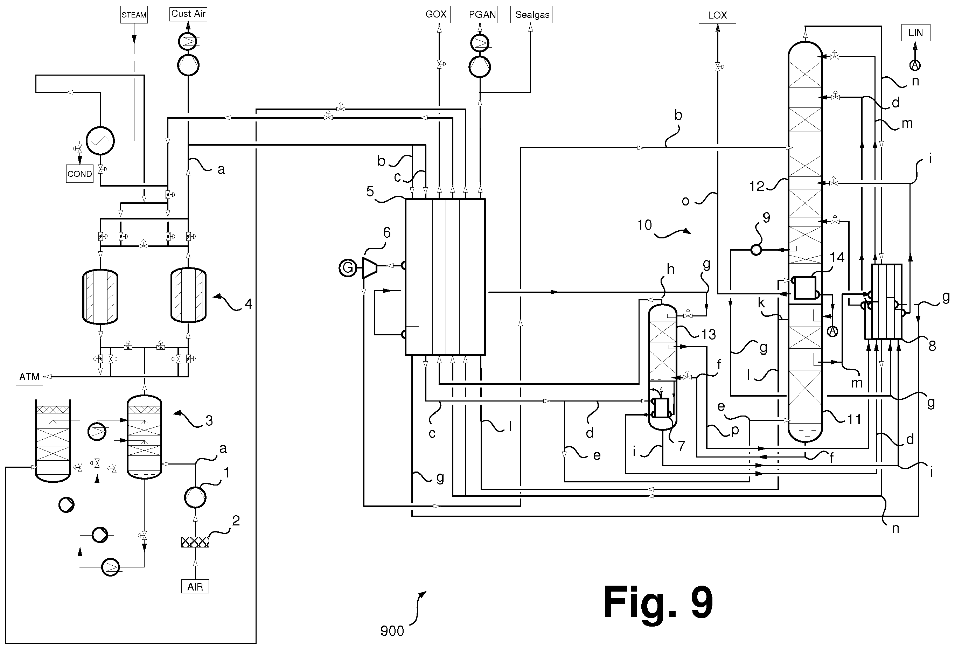

In Figur 9 ist eine Luftzerlegungsanlage gemäß einer weiteren Ausführungsform der vorliegenden Erfindung in Form eines stark vereinfachten Prozessflussdiagramms veranschaulicht und insgesamt mit 900 bezeichnet.

Die in Figur 9 dargestellte Luftzerlegungsanlage 800 unterscheidet sich von der in der Figur 1 dargestellten Luftzerlegungsanlage 100 im Wesentlichen dadurch, dass der Stoffstrom g unter Verwendung von Flüssigkeit gebildet wird, die oberhalb des Sumpfs der Niederdrucksäule 12 entnommen wird. Aus dem Sumpf der Niederdrucksäule 12 wird dabei Reinsauerstoff mit ca. 99,5% Sauerstoffgehalt in Form eines Stoffstroms o entnommen und als das flüssige Sauerstoffprodukt (LOX) bereitgestellt. Der Stoffstrom o kann insbesondere durch den Unterkühlungsgegenströmer 8 geführt werden.

**Patentansprüche**

1. Verfahren zur Tieftemperaturzerlegung von Luft unter Verwendung einer Luftzerlegungsanlage (100 - 900) mit einem Destillationssäulensystem (10), das eine auf einem ersten Druckniveau betriebene Hochdrucksäule (11), eine auf einem zweiten Druckniveau unterhalb des ersten Druckniveaus betriebene Niederdrucksäule (12) und eine auf einem dritten Druckniveau betriebene Stoffaustauschsäule (13) aufweist, wobei in der Stoffaustauschsäule (13) ein flüssiges erstes Fluid mit einem ersten Sauerstoffgehalt und ein gasförmiges zweites Fluid mit einem zweiten Sauerstoffgehalt unterhalb des ersten Sauerstoffgehalts einem Stoffaustausch miteinander unterworfen werden, wobei der Stoffaustauschsäule (13) ein gasförmiges drittes Fluid mit einem gegenüber dem ersten Sauerstoffgehalt verringerten dritten Sauerstoffgehalt entnommen und zumindest teilweise aus der Luftzerlegungsanlage (100 - 900) ausgeleitet wird, wobei der Stoffaustauschsäule (13) ein flüssiges viertes Fluid mit einem zumindest dem zweiten Sauerstoffgehalt entsprechenden vierten Sauerstoffgehalt entnommen und zumindest teilweise in die Niederdrucksäule (12) eingespeist wird, wobei das erste Fluid unter Verwendung zumindest eines Teils einer aus der Niederdrucksäule (12) entnommenen sauerstoffreichen Flüssigkeit gebildet wird, wobei das gasförmige zweite Fluid unter Verwendung einer aus der Hochdrucksäule (11) entnommenen sauerstoffangereicherten Flüssigkeit gebildet wird, und wobei die aus der Hochdrucksäule (11) entnommene sauerstoffangereicherte Flüssigkeit und Sumpfflüssigkeit der Stoffaustauschsäule (13) vermischt und mittels eines Kondensatorverdampfers (7) teilweise verdampft werden, **dadurch gekennzeichnet, dass**

   - in dem Kondensatorverdampfer (7) ein Flüssigkeitsstrom, der zumindest einen Teil der aus der Hochdrucksäule (11) entnommenen sauerstoffangereicherten Flüssigkeit und zumindest einen Teil der Sumpfflüssigkeit aus der Stoffaustauschsäule (13) umfasst, mittels seines eigenen Drucks durch einen Verdampfungsraum gedrückt und dort partiell verdampft wird,
   - aus der Stoffaustauschsäule (13) zwischen einer Einspeisestelle für das erste Fluid und einer Einspeisestelle für die sauerstoffangereicherte Flüssigkeit ein flüssiges fünftes Fluid mit einem fünften Sauerstoffgehalt zwischen dem dritten und dem vierten Sauerstoffgehalt entnommen und zumindest teilweise in die Niederdrucksäule (12) eingespeist wird, und
   - das fünfte Fluid oder sein in die Niederdrucksäule (12) eingespeister Anteil unterhalb des vierten Fluids oder seines in die Niederdrucksäule (12) eingespeisen Anteils in die Niederdrucksäule (12) eingespeist wird.

2. Verfahren nach Anspruch 1, bei dem in dem Kondensatorverdampfer (7) eine zuvor verdichtete und abgekühlte erste Luftmenge weiter abgekühlt und zumindest teilweise verflüssigt wird, wobei die abgekühlte und zumindest teilweise verflüssigte erste Luftmenge anschließend zumindest teilweise dem Destillationssäulensystem (10) zugeführt wird.

3. Verfahren nach Anspruch 2, bei dem die Verdichtung der ersten Luftmenge vor der zumindest teilweisen Verflüssigung in dem Kondensatorverdampfer (7) auf das erste Druckniveau, auf ein Druckniveau oberhalb des ersten Druckniveaus oder auf ein Druckniveau unterhalb des ersten Druckniveaus vorgenommen wird.

4. Verfahren nach einem der Ansprüche 2 oder 3, bei dem eine zuvor verdichtete und abgekühlte zweite Luftmenge auf das zweite Druckniveau entspannt und in die Niederdrucksäule (12) eingespeist wird.

5. Verfahren nach Anspruch 4, bei dem die Verdichtung der zweiten Luftmenge vor deren Abkühlung und Entspannung auf das zweite Druckniveau

   - auf ein Druckniveau oberhalb des ersten Druckniveaus durchgeführt wird, wobei der Luftzerlegungsanlage (100 - 900) ein oder mehrere flüssige Luftprodukte in einer Flüssigstickstoffäquivalentmenge entnommen wird oder werden, die bis zu 3,5 Molprozent einer dem Destillationssäulensystem (10) insgesamt zugeführten Stoffmenge entspricht, oder
   - auf das erste Druckniveau durchgeführt wird, wobei der Luftzerlegungsanlage (100 - 900) ein oder mehrere flüssige Luftprodukte in einer Flüssigstickstoffäquivalentmenge entnommen wird oder werden, die bis zu 1,7 Molprozent der dem Destillationssäulensystem (10) insgesamt zugeführten Stoffmenge entspricht, oder
   - auf ein Druckniveau unterhalb des ersten Druckniveaus durchgeführt wird, wobei der Luftzerlegungsanlage (100 - 900) ein oder mehrere flüssige Luftprodukte in einer Flüssigstickstoffäquivalentmenge entnommen wird oder werden, die bis zu 1,0 Molprozent einer dem Destillationssäulensystem (10) insgesamt zugeführten Stoffmenge entspricht,

   wobei sich die Flüssigstickstoffäquivalentmenge jeweils aus dem 1,08-fachen der entnommenen Flüssigsauerstoffmenge zuzüglich der entnommenen Flüssigstickstoffmenge bestimmt.

6. Verfahren nach einem der Ansprüche 2 oder 3, bei dem eine zuvor verdichtete und abgekühlte zweite Luftmenge auf das erste Druckniveau entspannt und in die Hochdrucksäule (11) eingespeist wird, wobei die Verdichtung der zweiten Luftmenge vor deren Abkühlung und Entspannung auf das erste Druckniveau auf ein Druckniveau vorgenommen wird, das oberhalb des ersten Druckniveaus liegt, und wobei der Luftzerlegungsanlage (100 - 900) ein oder mehrere gasförmige, stickstoffreiche Druckprodukte in einer Gesamtmenge entnommen wird oder werden, die bis zu 30 Molprozent einer dem Destillationssäulensystem (10) insgesamt zugeführten Stoffmenge entspricht.

7. Verfahren nach einem der vorstehenden Ansprüche, bei dem ein bei der partiellen Verdampfung in dem Kondensatorverdampfer (7) nicht verdampfter Anteil des Flüssigkeitsstroms, der zumindest einen Teil der aus der Hochdrucksäule (11) entnommenen sauerstoffangereicherten Flüssigkeit und zumindest einen Teil der Sumpfflüssigkeit aus der Stoffaustauschsäule (13) umfasst, von einem erneuten Durchströmen des Verdampfungsraums abgehalten wird.

8. Verfahren nach einem der vorstehenden Ansprüche, bei dem das erste Fluid unter Verwendung von Sumpfflüssigkeit aus der Niederdrucksäule (12) gebildet wird.

9. Verfahren nach einem der Ansprüche 1 bis 7, bei dem das erste Fluid unter Verwendung einer Flüssigkeit gebildet wird, die der Niederdrucksäule (12) mehrere theoretische oder praktische Böden oberhalb des Sumpfs entnommen wird, wobei aus dem Sumpf der Niederdrucksäule (12) weitere Flüssigkeit entnommen und aus der Luftzerlegungsanlage (100 - 900) ausgeleitet wird.

10. Verfahren nach einem der vorstehenden Ansprüche, bei dem der Hochdrucksäule (11) Sumpfflüssigkeit entnommen und in unveränderter stofflicher Zusammensetzung in die Niederdrucksäule eingespeist wird.

11. Verfahren nach einem der vorstehenden Ansprüche, bei dem der Hochdrucksäule (11) ein stickstoffangereichertes oder stickstoffreiches Fluid gasförmig entnommen wird und anschließend mittels einer oder mehrerer Entspannungsturbinen entspannt wird.

12. Luftzerlegungsanlage (100 - 900) mit einem Destillationssäulensystem (10), das eine für einen Betrieb auf einem ersten Druckniveau eingerichtete Hochdrucksäule (11), eine für einen Betrieb auf einem zweiten Druckniveau unterhalb des ersten Druckniveaus eingerichtete Niederdrucksäule (12) und eine für einen Betrieb auf einem dritten Druckniveau eingerichtete Stoffaustauschsäule (13) aufweist, wobei die Luftzerlegungsanlage (100 - 900) dafür eingerichtet ist, in der Stoffaustauschsäule (13) ein flüssiges erstes Fluid mit einem ersten Sauerstoffgehalt und ein gasförmiges zweites Fluid mit einem zweiten Sauerstoffgehalt unterhalb des ersten Sauerstoffgehalts einem Stoffaustausch miteinander zu unterwerfen, der Stoffaustauschsäule (13) ein gasförmiges drittes Fluid mit einem gegenüber dem ersten Sauerstoffgehalt verringerten dritten Sauerstoffgehalt zu entnehmen und zumindest teilweise aus der Luftzerlegungsanlage (100 - 900) auszuleiten, der weiteren Stoffaustauschsäule (13) ein flüssiges viertes Fluid mit einem zumindest dem zweiten Sauerstoffgehalt entsprechenden vierten Sauerstoffgehalt zu entnehmen und zumindest teilweise in die Niederdrucksäule (12) einzuspeisen, das erste Fluid unter Verwendung zumindest eines Teils einer aus der Niederdrucksäule (12) entnommenen sauerstoffreichen Flüssigkeit zu bilden, das zweite Fluid unter Verwendung einer aus der Hochdrucksäule (11) entnommenen sauerstoffangereicherten Flüssigkeit zu bilden, und die der Hochdrucksäule (11) entnommene sauerstoffangereicherte Flüssigkeit und Sumpfflüssigkeit der Stoffaustauschsäule (13) zuvermischen und mittels eines Kondensatorverdampfers (7) teilweise zu verdampfen, **dadurch gekennzeichnet, dass**

- der Kondensatorverdampfer (7) derart ausgebildet und in die Luftzleregungsanlage eingebunden ist, dass ein Flüssigkeitsstrom, der zumindest einen Teil der aus der Hochdrucksäule (11) entnommenen sauerstoffangereicherten Flüssigkeit und zumindest einen Teil der Sumpfflüssigkeit aus der Stoffaustauschsäule (13) umfasst, mittels seines eigenen Drucks durch einen Verdampfungsraum gedrückt und dort partiell verdampft wird,
- Mittel bereitgestellt sind, die dafür eingerichtet sind, aus der Stoffaustauschsäule (13) zwischen einer Einspeisestelle für das erste Fluid und einer Einspeisestelle für die sauerstoffangereicherte Flüssigkeit ein flüssiges fünftes Fluid mit einem fünften Sauerstoffgehalt zwischen dem dritten und dem vierten Sauerstoffgehalt zu entnehmen und zumindest teilweise in die Niederdrucksäule (12) einzuspeisen, und
- Mittel bereitgestellt sind, die dafür eingerichtet sind, das fünfte Fluid oder seinen in die Niederdrucksäule (12) eingespeisten Anteil unterhalb des vierten Fluids oder seines in die Niederdrucksäule (12) eingespeisen Anteils in die Niederdrucksäule (12) einzuspeisen.

13. Luftzerlegungsanlage (100 - 900) nach Anspruch 12, bei dem die Hochdrucksäule (11) und die Niederdrucksäule (12) mittels eines mehrstöckigen Kaskadenverdampfers oder mittels eines Fallfilmverdampfers (14) wärmetauschend miteinander verbunden sind.

Fig. 1

Fig. 2

Fig. 3

STEAM | Cust Air | GOX | PGAN1 | Sealgas | LOX | LIN

COND
ATM
AIR

300

Fig. 4

Fig. 5A

EP 3 557 166 A1

Fig. 5B

Fig. 5C

Fig. 6

**Fig. 7**

Fig. 8

**Fig. 9**

900

28

**Europäisches Patentamt**
**European Patent Office**
**Office européen des brevets**

# EUROPÄISCHER RECHERCHENBERICHT

**Nummer der Anmeldung**

EP 19 02 0260

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | US 5 704 228 A (TRANIER JEAN-PIERRE [FR]) 6. Januar 1998 (1998-01-06) * Spalte 4, Zeilen 23-39; Abbildung 5 * ----- | 1-13 | INV. F25J3/04 |
| Y,D | JP 2000 258054 A (NIPPON OXYGEN CO LTD) 22. September 2000 (2000-09-22) * Abbildungen 1,2 * ----- | 1-13 | |
| Y | EP 0 982 554 A1 (AIR LIQUIDE [FR]) 1. März 2000 (2000-03-01) * Abbildung 4 * ----- | 6 | |
| Y | ARNETH S ET AL: "CHARACTERISTICS OF THERMOSIPHON REBOILERS", REVUE GENERALE DE THERMIQUE, ELSEVIER EDITIONS SCIENTIFIQUES ET MEDICALES,PARIS, FR, Bd. 40, Nr. 4, 1. April 2001 (2001-04-01), Seiten 385-391, XP001009149, ISSN: 0035-3159 * Abbildung 1 * ----- | 7 | |
| Y | US 4 022 030 A (BRUGEROLLE JEAN RENAUD) 10. Mai 1977 (1977-05-10) * Abbildung 10 * ----- | 11 | **RECHERCHIERTE SACHGEBIETE (IPC)** F25J |
| A,D | US 2001/003909 A1 (BRUGEROLLE JEAN RENAUD [FR]) 21. Juni 2001 (2001-06-21) * Abbildung 1 * ----- | 1,9,12 | |
| A,D | CN 106 123 489 A (SUZHOU OXYGEN PLANT CO LTD) 16. November 2016 (2016-11-16) * Abbildung * ----- | 1,9,12 | |

Der vorliegende Recherchenbericht wurde für alle Patentansprüche erstellt

| Recherchenort | Abschlußdatum der Recherche | Prüfer |
|---|---|---|
| München | 7. August 2019 | Göritz, Dirk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 02 0260

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2019

| Im Recherchenbericht angeführtes Patentdokument | | Datum der Veröffentlichung | Mitglied(er) der Patentfamilie | | Datum der Veröffentlichung |
|---|---|---|---|---|---|
| US 5704228 | A | 06-01-1998 | AU | 705015 B2 | 13-05-1999 |
| | | | BR | 9601021 A | 30-12-1997 |
| | | | CA | 2171679 A1 | 16-09-1996 |
| | | | CN | 1142042 A | 05-02-1997 |
| | | | DE | 69611469 D1 | 15-02-2001 |
| | | | DE | 69611469 T2 | 21-06-2001 |
| | | | EP | 0732556 A1 | 18-09-1996 |
| | | | ES | 2153942 T3 | 16-03-2001 |
| | | | FR | 2731781 A1 | 20-09-1996 |
| | | | JP | H0979744 A | 28-03-1997 |
| | | | KR | 960033506 A | 22-10-1996 |
| | | | US | 5704228 A | 06-01-1998 |
| | | | ZA | 9602087 B | 30-10-1996 |
| JP 2000258054 | A | 22-09-2000 | JP | 4177507 B2 | 05-11-2008 |
| | | | JP | 2000258054 A | 22-09-2000 |
| EP 0982554 | A1 | 01-03-2000 | EP | 0982554 A1 | 01-03-2000 |
| | | | FR | 2782787 A1 | 03-03-2000 |
| | | | JP | 2000203827 A | 25-07-2000 |
| | | | US | 6247333 B1 | 19-06-2001 |
| US 4022030 | A | 10-05-1977 | AU | 471345 B2 | 06-09-1973 |
| | | | BE | 778812 A | 01-08-1972 |
| | | | CA | 964571 A | 18-03-1975 |
| | | | DE | 2204376 A1 | 17-08-1972 |
| | | | ES | 399274 A1 | 01-06-1975 |
| | | | FR | 2169561 A6 | 07-09-1973 |
| | | | GB | 1387472 A | 19-03-1975 |
| | | | IT | 961138 B | 10-12-1973 |
| | | | NL | 7201234 A | 03-08-1972 |
| | | | US | 4022030 A | 10-05-1977 |
| | | | ZA | 7200578 B | 25-10-1972 |
| US 2001003909 | A1 | 21-06-2001 | AT | 297001 T | 15-06-2005 |
| | | | DE | 60020500 T2 | 23-03-2006 |
| | | | EP | 1106945 A1 | 13-06-2001 |
| | | | FR | 2801963 A1 | 08-06-2001 |
| | | | JP | 2001194058 A | 17-07-2001 |
| | | | US | 2001003909 A1 | 21-06-2001 |
| CN 106123489 | A | 16-11-2016 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3179186 A1
- US 5704228 A
- JP 2000258054 A
- US 20010003909 A1
- CN 106123489 A
- EP 0982554 A1
- WO 2013053425 A2
- DE 102010051526 A1

**In der Beschreibung aufgeführte Nicht-Patentliteratur**

- Cryogenic Rectification. Industrial Gases Processing. Wiley-VCH, 2006
- Development of Low Oxygen-Purity Processes. **F.G. KERRY.** Industrial Gas Handbook: Gas Separation and Purification. CRC Press, 2006
- Contemporary Liquefaction Cycles'', 2.6, ''Theoretical Analysis of the Claude Cycle'' und 3.8.1, ''The Lachmann Principle. **F.G. KERRY.** Industrial Gas Handbook: Gas Separation and Purification. CRC Press, 2006